(19) Europäisches Patentamt / European Patent Office / Office européen des brevets

(11) **EP 4 561 216 A1**

(12) **EUROPEAN PATENT APPLICATION**
published in accordance with Art. 153(4) EPC

(43) Date of publication:
28.05.2025 Bulletin 2025/22

(21) Application number: 23851930.0

(22) Date of filing: 10.08.2023

(51) International Patent Classification (IPC):
**H04W 72/02** *(2009.01)* **H04W 72/40** *(2023.01)*

(52) Cooperative Patent Classification (CPC):
**H04W 72/02; H04W 72/40**

(86) International application number:
**PCT/CN2023/112193**

(87) International publication number:
**WO 2024/032709 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 11.08.2022 CN 202210961974

(71) Applicant: **Huawei Technologies Co., Ltd.**
**Shenzhen, Guangdong 518129 (CN)**

(72) Inventors:
• **LI, Cheng**
 **Shenzhen, Guangdong 518129 (CN)**
• **HUANG, Su**
 **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHODS FOR TRANSMITTING CONTROL INFORMATION, AND COMMUNICATION APPARATUS**

(57) Embodiments of this application provide a control information transmission method. The method includes: A first terminal device determines, based on a quantity of configured reference signal resources, a start position of a frequency domain resource occupied by a control channel, where the control channel is for carrying control information, and the configured reference signal resources include a plurality of reference signal resources. The first terminal device sends the control information to a second terminal device on the control channel based on the start position of the frequency domain resource. In the method, the first terminal device determines, based on the quantity of configured reference signal resources, the start position of the frequency domain resource occupied by the control channel, instead of specifying that the start position of the frequency domain resource occupied by the control channel is the same as a start position of a frequency domain resource occupied by a shared channel, to reduce a probability of a conflict caused by sending control information on the control channel by different terminal devices.

First terminal device

Second terminal device

S810: Determine, based on a quantity of configured reference signal resources, a start position of a frequency domain resource occupied by a control channel

S820: Send control information to the second terminal device on the control channel based on the start position of the frequency domain resource

S830: Determine, based on the quantity of configured reference signal resources, the start position of the frequency domain resource occupied by the control channel

S840: Demodulate the control information

FIG. 8

**Description**

This application claims priority to Chinese Patent Application No. 202210961974.0, filed with the China National Intellectual Property Administration on August 11, 2022 and entitled "CONTROL INFORMATION TRANSMISSION METHOD AND COMMUNICATION APPARATUS", which is incorporated herein by reference in its entirety.

**TECHNICAL FIELD**

This application relates to the communication field, and more specifically, to a control information transmission method and a communication apparatus.

**BACKGROUND**

Currently, transmission between terminal devices may be referred to as sidelink (sidelink, SL) transmission. Currently, a sidelink communication resource is scheduled in a unit of a sub-channel, and an index of a frequency domain start (or lowest) resource block (Resource block, RB) of a physical sidelink control channel (Physical Sidelink Control Channel, PSCCH) is the same as that of a physical sidelink shared channel (Physical Sidelink Shared Channel, PSSCH).
In a positioning scenario, to improve positioning performance, mutual resource multiplexing (for example, time division multiplexing, frequency division multiplexing, or comb division multiplexing) needs to be considered between different terminal devices, to fully occupy a system bandwidth as much as possible. If the index of the frequency domain lowest RB of the PSCCH is still the same as that of the PSSCH, when a plurality of terminal devices send positioning reference signals in a same slot, control information carried on PSCCHs of different terminal devices conflicts with each other. Therefore, how to avoid control information carried on PSCCHs of different terminal devices becomes an urgent problem to be resolved.

**SUMMARY**

Embodiments of this application provide a control information transmission method, to reduce a probability of a conflict between control information carried on PSCCHs of different terminal devices.
According to a first aspect, a control information transmission method is provided. The method may be performed by a first terminal device, or may be performed by a component (for example, a chip or a circuit) of the first terminal device. This is not limited in this application. For ease of description, an example in which the method is performed by the first terminal is used below for description.
The control information transmission method includes: The first terminal device determines, based on a quantity of configured reference signal resources, a start position of a frequency domain resource occupied by a control channel, where the control channel is for carrying control information, and the configured reference signal resources include a plurality of reference signal resources. The first terminal device sends the control information on the control channel based on the start position of the frequency domain resource.
The first terminal device may send the control information to a second terminal device on the control channel based on the start position of the frequency domain resource. In this application, the second terminal device includes a road side unit or another device that can implement a function of receiving and demodulating the control information sent by the first terminal device in an SL scenario.
According to a second aspect, a control information transmission method is provided. The method may be performed by a second terminal device, or may be performed by a component (for example, a chip or a circuit) of the second terminal device. This is not limited in this application. For ease of description, an example in which the method is performed by the second terminal device is used below for description.
The control information transmission method includes: The second terminal device determines, based on a quantity of configured reference signal resources, a start position of a frequency domain resource occupied by a control channel, where the control channel is for carrying control information, and the configured reference signal resources include a plurality of reference signal resources. The second terminal device receives the control information on the control channel based on the start position of the frequency domain resource.
For example, that a terminal device (the first terminal device or the second terminal device) determines, based on a quantity of configured reference signal resources, a start position of a frequency domain resource occupied by a control channel may be understood as follows: The terminal device determines the start position of the frequency domain resource occupied by the control channel, where the start position of the frequency domain resource occupied by the control channel is related to the quantity of configured reference signal resources.
The quantity of configured reference signal resources may be pre-configured or may be configured. The configured reference signal resource may be a configured reference signal resource in one or more slots.

Specifically, the plurality of reference signal resources are respectively for sending a plurality of reference signals, and the reference signals are in one-to-one correspondence with the reference signal resources. For example, the first terminal device occupies one of the plurality of reference signal resources to send a first reference signal, and the first reference signal is a reference signal that is in the plurality of reference signals and that is to be sent by the first terminal device.

Based on the foregoing technical solution, the first terminal device may determine, based on the quantity of configured reference signal resources, the start position of the frequency domain resource occupied by the control channel (for example, a PSCCH). In other words, for the start position of the frequency domain resource occupied by the control channel, reference to a configuration manner of multiplexing a PSSCH and a PSCCH (where for example, the start position of the PSCCH is consistent with that of the PSSCH) is not required, but there are different determining manners. For a positioning reference signal and control information, a start position of the PSCCH may be inconsistent with that of a sidelink positioning reference signal (Sidelink Positioning reference signal, SL-PRS), to improve flexibility of PSCCH resource allocation and reduce conflicts and collisions between terminals, so as to improve a probability of positioning availability and the like.

In some implementations of the first aspect or the second aspect, a start position of one of a plurality of sub-bands of a bandwidth of a resource pool in which the configured reference signal resources are located is used as the start position of the frequency domain resource, a quantity of the plurality of sub-bands is related to the quantity of configured reference signal resources, and the start position of the sub-band includes any one of the following: a start resource block index, a start sub-channel index, a start frequency index, or a start subcarrier index.

For example, in some implementations of the first aspect or the second aspect, that the terminal device (the first terminal device or the second terminal device) determines, based on a quantity of configured reference signal resources, a start position of a frequency domain resource occupied by a control channel includes: The terminal device divides, based on the quantity of configured reference signal resources, a bandwidth of a resource pool in which the configured reference signal resources are located into a plurality of sub-bands, where a quantity of the plurality of sub-bands is related to the quantity of configured reference signal resources, a start position of one of the plurality of sub-bands is a start position of a first frequency domain resource, the resource pool is a resource pool including the configured reference signal resource, and the start position of the sub-band includes any one of the following: a start resource block index, a start sub-channel index, a start frequency index, or a start subcarrier index.

That the quantity of the plurality of sub-bands is related to the quantity of configured reference signal resources may be that the quantity of the plurality of sub-bands is equal to the quantity of configured reference signal resources.

In addition, when the bandwidth of the resource pool in which the configured reference signal resources are located is an integer multiple of the quantity of configured reference signal resources, that the terminal device divides, based on the quantity of configured reference signal resources, a bandwidth of a resource pool in which the configured reference signal resources are located into a plurality of sub-bands includes: The terminal device equally divides, based on the quantity of configured reference signal resources, the bandwidth of the resource pool in which the configured reference signal resources are located into the plurality of sub-bands.

Based on the foregoing technical solution, the terminal device may use the start position of one of the plurality of sub-bands of the bandwidth of the resource pool in which the configured reference signal resources are located as the start position of the frequency domain resource. A probability that different terminal devices use a start position of a same sub-band as start positions of frequency domain resources of control channels corresponding to the terminal devices is low. In other words, a probability of a conflict caused by sending control information on the control channel by different terminal devices can be reduced.

In some implementations of the first aspect or the second aspect, bandwidths of the plurality of sub-bands are the same.

In some implementations of the first aspect or the second aspect, the quantity of configured reference signal resources, the start position of the frequency domain resource, and an index of the frequency domain resource satisfy the following relationship:

$$RB_{lowest} = \left(k_{pscch} - 1\right)\left\lceil \frac{N_{RB}^{Total}}{K_{prs}} \right\rceil + f_k;$$

or

$$SubCH_{lowest} = \left(k_{pscch} - 1\right)\left\lceil \frac{N_{Sub}^{Total}}{K_{prs}} \right\rceil + f_k,$$

where

*RB*$_{lowest}$ represents a start resource block of the frequency domain resource, $N_{RB}^{Total}$ represents the bandwidth of the resource pool, SubCH$_{lowest}$ represents a start sub-channel of the frequency domain resource, $N_{sub}^{Total}$ represents a quantity of sub-channels included in the resource pool, K$_{prs}$ represents a quantity of configured resources, k$_{pscch}$ represents the index of the frequency domain resource, $\lceil \cdot \rceil$ represents rounding, k$_{pscch}$ is greater than or equal to 1 and less than or equal to K$_{prs}$, and *f*$_k$ is an offset value.

In some implementations of the first aspect or the second aspect, the quantity of configured reference signal resources, the start position of the frequency domain resource, and an index of the frequency domain resource satisfy the following relationship:

$$RB_{lowest} = k_{pscch} \left\lceil \frac{N_{RB}^{Total}}{K_{prs}} \right\rceil + f_k;$$

or

$$SubCH_{lowest} = k_{pscch} \left\lceil \frac{N_{sub}^{Total}}{K_{prs}} \right\rceil + f_k,$$

where

RB$_{lowest}$ represents a start resource block of the frequency domain resource, $N_{RB}^{Total}$ represents the bandwidth of the resource pool, SubCH$_{lowest}$ represents a start sub-channel of the frequency domain resource, $N_{sub}^{Total}$ represents a quantity of sub-channels included in the resource pool, K$_{prs}$ represents the quantity of configured reference signal resources, k$_{pscch}$ represents the index of the frequency domain resource, $\lceil \cdot \rceil$ represents rounding, k$_{pscch}$ is greater than or equal to 1 and less than or equal to K$_{prs}$, and f$_k$ is an offset value.

In some implementations of the first aspect or the second aspect, the quantity of configured reference signal resources, the start position of the frequency domain resource, and an index of the frequency domain resource satisfy the following relationship:

$$RB_{lowest} = (k_{prs} + k_0) \left\lceil \frac{N_{RB}^{Total}}{K_{prs}} \right\rceil + f_k;$$

or

$$SubCH_{lowest} = (k_{prs} + k_0) \left\lceil \frac{N_{sub}^{Total}}{K_{prs}} \right\rceil + f_k,$$

where

RB$_{lowest}$ represents a start resource block of the frequency domain resource, $N_{RB}^{Total}$ represents the bandwidth of the resource pool, SubCH$_{lowest}$ represents a start sub-channel of the frequency domain resource, $N_{sub}^{Total}$ represents a quantity of sub-channels included in the resource pool, K$_{prs}$ represents the quantity of configured reference signal resources, k$_{prs}$ represents an index of the reference signal resource, $\lceil \cdot \rceil$ represents rounding, f$_k$ is an offset value, and k$_0$ is a constant.

In this application, a position of a PSCCH frequency domain resource may be determined based on a PRS corresponding to a PSCHH frequency domain resource.

k$_{prs}$ above may be replaced with k$_{sl-prs}$, in this application, f$_k$ is the offset value, and a value of f$_k$ may be an integer. For example, f$_k$ is an integer greater than or equal to -1. For example, f$_k$ is -1 or 1. In addition, in this application, $N_{RB}^{Total}$ may further indicate a total bandwidth occupied by the plurality of sub-bands, and the total bandwidth indicates a bandwidth from a lowest frequency of a sub-band with a lowest frequency to a highest frequency of a sub-band with a highest frequency.

In some implementations of the first aspect, the determining, based on a quantity of configured reference signal resources, a start position of a frequency domain resource occupied by a control channel includes: determining, based on the quantity of configured reference signal resources and a first index, the start position of the frequency domain resource occupied by the control channel, where the first index is an index of a reference signal resource used by the first terminal device to send a reference signal; in other words, the first terminal device sends a reference signal on a first reference signal resource corresponding to the first index; in other words, the first index is an index of a first reference signal resource, the first reference signal resource is for sending a reference signal, and the first reference signal resource is one of the configured reference signal resources. In some implementations of the first aspect, that the first terminal device sends the control information on the control channel based on the start position of the frequency domain resource includes: The first terminal device sends the control information on the control channel based on a start position of a sub-band corresponding to the first index.

In some implementations of the second aspect, the determining, based on a quantity of configured reference signal resources, a start position of a frequency domain resource occupied by a control channel includes: determining, based on the quantity of configured reference signal resources and a first index, the start position of the frequency domain resource occupied by the control channel, where the first index is an index of a reference signal resource used by the second terminal device to receive a reference signal; in other words, the second terminal device receives a reference signal on a reference signal resource corresponding to the first index; in other words, the first index is an index of a first reference signal resource, the first reference signal resource is for receiving a reference signal, and the first reference signal resource is one of the configured reference signal resources.

In some implementations of the second aspect, that the second terminal device receives the control information on the control channel based on the start position of the frequency domain resource includes: The second terminal device receives the control information on the control channel based on a start position of a sub-band corresponding to the first index.

Specifically, the first index is one of a plurality of indexes respectively corresponding to the plurality of reference signal resources.

Based on the foregoing technical solution, the terminal device determines the start position of the frequency domain resource of the control channel based on the reference signal resource occupied by the terminal device, and different terminal devices occupy different reference signal resources. Therefore, start positions of frequency domain resources of control channels determined by different terminal devices are different, and bandwidths of the control channels determined by different terminal devices are not greater than bandwidths of sub-bands; in other words, bandwidths of the control channels determined by different terminal devices are not greater than an interval between two start positions. This can avoid a conflict caused by sending control information on the control channel by different terminal devices.

In some implementations of the first aspect or the second aspect, an index of each of the plurality of reference signal resources is determined based on identifiers of the plurality of reference signal resources, and an index of each of the plurality of sub-bands is determined based on a frequency domain position corresponding to each of the plurality of sub-bands.

For example, in some implementations of the first aspect or the second aspect, the terminal device (the first terminal device or the second terminal device) determines an index of each of the plurality of reference signal resources based on identifiers of the plurality of reference signal resources, and determines an index of each of the plurality of sub-bands based on a frequency domain position corresponding to each of the plurality of sub-bands.

The identifier of the reference signal resource is for identifying the reference signal resource. The identifiers of the plurality of reference signal resources may be a plurality of identifiers of different numbers. The index of the reference signal resource may be understood as re-encoding the plurality of reference signal resources.

In some implementations of the first aspect or the second aspect, when a minimum value of the index is 0, the quantity of configured reference signal resources, the start position of the frequency domain resource, and the index of the frequency domain resource satisfy the following relationship:

$$RB_{lowest} = k_{prs} \left\lceil \frac{N_{RB}^{Total}}{K_{prs}} \right\rceil + f_k; \text{ or } SubCH_{lowest} = k_{prs} \left\lceil \frac{N_{Sub}^{Total}}{K_{prs}} \right\rceil + f_k;$$

or

when a minimum value of the index is 1, the quantity of configured reference signal resources, the start position of the frequency domain resource, and the index of the frequency domain resource satisfy the following relationship:

$$RB_{lowest} = (k_{prs} - 1) \left\lceil \frac{N_{RB}^{Total}}{K_{prs}} \right\rceil + f_k; \text{ or } SubCH_{lowest} = (k_{prs} - 1) \left\lceil \frac{N_{Sub}^{Total}}{K_{prs}} \right\rceil + f_k,$$

where

$k_{prs}$ represents the index of the frequency domain resource, $RB_{lowest}$ represents the start resource block of the frequency domain resource, $N_{RB}^{Total}$ represents the bandwidth of the resource pool, $SubCH_{lowest}$ represents a start sub-channel position of the frequency domain resource, $N_{sub}^{Total}$ represents the quantity of sub-channels included in the resource pool, $K_{prs}$ represents the quantity of configured resources, $\lceil \cdot \rceil$ represents rounding, $f_k$ and is the offset value.

In some implementations of the first aspect or the second aspect, the plurality of reference signal resources are located in one slot; or the plurality of reference signal resources are located in a plurality of slots, and at least one of the plurality of slots includes a plurality of frequency domain resources respectively corresponding to a plurality of control channels.

Based on the foregoing technical solution, control channels in a plurality of slots are jointly designed, so that resource overheads of the control channels can be effectively reduced. For example, control channels in two slots are jointly designed, and a control channel in each slot occupies three symbols. In this case, overheads are 3/14, the two slots are jointly encoded, and overheads of the PSCCH are 3/28, which are reduced by a half. Therefore, utilization of the reference signal resource and a capacity of the reference signal or the terminal device are improved.

In some implementations of the first aspect or the second aspect, the plurality of reference signal resources are respectively for sending a plurality of reference signals, and resource multiplexing is performed on the plurality of reference signals in at least one of the following multiplexing manners: frequency division multiplexing, time division multiplexing, or comb division multiplexing.

According to a third aspect, a control information transmission method is provided. The method may be performed by a first terminal device, or may be performed by a component (for example, a chip or a circuit) of the first terminal device. This is not limited in this application. For ease of description, an example in which the method is performed by the first terminal is used below for description.

The control information transmission method includes: The first terminal device receives configuration information from a network device, where the configuration information is for configuring a reference signal resource. The first terminal device determines, based on the configuration information, a start position of a frequency domain resource occupied by a control channel, where the control channel is for carrying control information. The first terminal device sends the control information on the control channel based on the start position of the frequency domain resource.

Based on the foregoing technical solution, the first terminal device determines, based on the configuration information of the reference signal resource, the start position of the frequency domain resource occupied by the control channel. Because reference signals resources of different terminal devices usually have different configuration information, different terminal devices correspond to different start positions of frequency domain resources, so that a probability of a conflict caused by sending control information on the control channel by different terminal devices can be reduced.

In some implementations of the third aspect, the method further includes: dividing a bandwidth of a resource pool into a plurality of sub-bands based on a comb size.

In some implementations of the third aspect, the configuration information includes the comb size and a frequency domain offset value that correspond to the reference signal resource.

In some implementations of the third aspect, a start position of a first sub-band in a plurality of sub-bands of a bandwidth of a resource pool in which the reference signal resource is located is used as the start position of the frequency domain resource, a quantity of the plurality of sub-bands is related to the comb size, a ranking of the first sub-band in the plurality of sub-bands is related to the frequency domain offset value, and the start position of the sub-band includes any one of the following: a start resource block index, a start sub-channel index, a start frequency index, or a start subcarrier index. The frequency domain offset value may be understood as a resource element offset (resource element offset, RE offset) or a resource block offset (resource block offset, RB offset).

For example, in some implementations of the third aspect, the first terminal determines, based on the frequency domain offset value, a ranking of a first sub-band corresponding to the frequency domain resource in the plurality of sub-bands, where a start position of the first sub-band is the start position of the frequency domain resource, and the start position of the first sub-band includes any one of the following: a start resource block index, a start sub-channel index, a start frequency index, or a start subcarrier index. When the bandwidth of the resource pool in which the reference signal resource is located is an integer multiple of the comb size, that the terminal device divides, based on the comb size, a bandwidth of a resource pool in which the reference signal resource is located into a plurality of sub-bands includes: The terminal device equally divides, based on the comb size, the bandwidth of the resource pool in which the reference signal resource is located into the plurality of sub-bands.

Based on the foregoing technical solution, the first terminal device determines, based on the comb size and the frequency domain offset value of the reference signal resource, the start position of the frequency domain resource occupied by the control channel. Because different terminal devices usually occupy different comb teeth, that is, there are different frequency domain offsets, different terminal devices correspond to different start positions of frequency domain resources, so that a probability of a conflict caused by sending control information on the control channel by different terminal devices can be reduced.

In some implementations of the third aspect, bandwidths of the plurality of sub-bands are the same.
In some implementations of the third aspect, the comb size, the offset value, and the start position of the frequency domain resource satisfy the following relationship:

$$RB_{lowest} = k_{prs'} \left\lceil \frac{N_{RB}^{Total}}{C_{prs}} \right\rceil + f_k; \text{ or } SubCH_{lowest} = k_{prs'} \left\lceil \frac{N_{sub}^{Total}}{C_{prs}} \right\rceil + f_k,$$

where
$k_{prs'}$ represents the offset value, $RB_{lowest}$ represents a start resource block position of the frequency domain resource, $N_{RB}^{Total}$ represents the bandwidth of the resource pool, $SubCH_{lowest}$ represents a start sub-channel position of the frequency domain resource, $N_{sub}^{Total}$ represents a quantity of sub-channels included in the resource pool, $C_{prs}$ represents the comb size, $\lceil \cdot \rceil$ represents rounding, and $f_k$ is an offset value.

According to a fourth aspect, a communication apparatus is provided. The communication apparatus includes a communication interface and a processor. The communication interface is configured to send and receive data and/or signaling. The processor is configured to execute a computer program or instructions, to enable the communication apparatus to perform the method according to any one of the first aspect and the possible implementations of the first aspect, or to enable the communication apparatus to perform the method according to any one of the second aspect and the possible implementations of the second aspect, or to enable the communication apparatus to perform the method according to any one of the third aspect and the possible implementations of the third aspect.

In some possible implementations of the fourth aspect, the communication apparatus further includes a memory, and the memory is configured to store the computer program or the instructions.

According to a fifth aspect, a communication apparatus is provided. The communication apparatus may be configured to implement the method in the first aspect. The communication apparatus may be a first terminal device, or may be an apparatus (for example, a chip, a chip system, or a circuit) in the first terminal device, or may be an apparatus that can be used together with the first terminal device.

In a possible implementation, the communication apparatus may include modules or units that are in one-to-one correspondence with the method/operations/steps/actions described in the first aspect. The modules or units may be hardware circuits, may be software, or may be implemented by hardware circuits in combination with software.

The communication apparatus includes: a processing unit, configured to determine, based on a quantity of configured reference signal resources, a start position of a frequency domain resource occupied by a control channel, where the control channel is for carrying control information, and the configured reference signal resources include a plurality of reference signal resources; and a transceiver unit, configured to send the control information on the control channel based on the start position of the frequency domain resource.

It should be understood that the foregoing transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This is uniformly described herein, and details are not described below again.

According to a sixth aspect, a communication apparatus is provided. The communication apparatus may be configured to implement the method in the second aspect. The communication apparatus may be a second terminal device, or may be an apparatus (for example, a chip, a chip system, or a circuit) in the second terminal device, or may be an apparatus that can be used together with the second terminal device.

In a possible implementation, the communication apparatus may include modules or units that are in one-to-one correspondence with the method/operations/steps/actions described in the second aspect. The modules or units may be hardware circuits, may be software, or may be implemented by hardware circuits in combination with software.

The communication apparatus includes: a processing unit, configured to determine, based on a quantity of configured reference signal resources, a start position of a frequency domain resource occupied by a control channel, where the control channel is for carrying control information, and the configured reference signal resources include a plurality of reference signal resources; and a transceiver unit, configured to receive the control information on the control channel based on the start position of the frequency domain resource.

It should be understood that the foregoing transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This is uniformly described herein, and details are not described below again.

In some implementations of the fifth aspect or the sixth aspect, a start position of one of a plurality of sub-bands of a bandwidth of a resource pool in which a reference signal resource is located is used as the start position of the frequency domain resource, a quantity of the plurality of sub-bands is related to the quantity of configured reference signal resources, and the start position of the sub-band includes any one of the following: a start resource block index, a start sub-channel index, a start frequency index, or a start subcarrier index.

For example, in some implementations of the fifth aspect or the sixth aspect, the processing unit is further configured to divide, based on the quantity of configured reference signal resources, a bandwidth of a resource pool in which the reference signal resource is located into a plurality of sub-bands, where a quantity of the plurality of sub-bands is related to the quantity of configured reference signal resources, a start position of one of the plurality of sub-bands is a start position of a first frequency domain resource, the resource pool is a resource pool including the configured reference signal resource, and the start position of the sub-band includes any one of the following: a start resource block index, a start sub-channel index, a start frequency index, or a start subcarrier index.

In some implementations of the fifth aspect or the sixth aspect, bandwidths of the plurality of sub-bands are the same.

In some implementations of the fifth aspect or the sixth aspect, the quantity of configured reference signal resources, the start position of the frequency domain resource, and an index of the frequency domain resource satisfy the following relationship:

$$RB_{lowest} = \left(k_{pscch} - 1\right) \left\lceil \frac{N_{RB}^{Total}}{K_{prs}} \right\rceil + f_k;$$

or

$$SubCH_{lowest} = \left(k_{pscch} - 1\right) \left\lceil \frac{N_{sub}^{Total}}{K_{prs}} \right\rceil + f_k,$$

where

$RB_{lowest}$ represents a start resource block of the frequency domain resource, $N_{RB}^{Total}$ represents the bandwidth of the resource pool, SubCH$_{lowest}$ represents a start sub-channel of the frequency domain resource, $N_{sub}^{Total}$ represents a quantity of sub-channels included in the resource pool, K$_{prs}$ represents a quantity of configured resources, k$_{pscch}$ represents the index of the frequency domain resource, $\lceil \cdot \rceil$ represents rounding, k$_{pscch}$ is greater than or equal to 1 and less than or equal to K$_{prs}$, and $f_k$ is an offset value.

In some implementations of the fifth aspect or the sixth aspect, the quantity of configured reference signal resources, the start position of the frequency domain resource, and an index of the frequency domain resource satisfy the following relationship:

$$RB_{lowest} = k_{pscch} \left\lceil \frac{N_{RB}^{Total}}{K_{prs}} \right\rceil + f_k;$$

or

$$SubCH_{lowest} = k_{pscch} \left\lceil \frac{N_{sub}^{Total}}{K_{prs}} \right\rceil + f_k,$$

where

$RB_{lowest}$ represents a start resource block of the frequency domain resource, $N_{RB}^{Total}$ represents the bandwidth of the resource pool, SubCH$_{lowest}$ represents a start sub-channel of the frequency domain resource, $N_{sub}^{Total}$ represents a quantity of sub-channels included in the resource pool, K$_{prs}$ represents the quantity of configured reference signal resources, k$_{pscch}$ represents the index of the frequency domain resource, $\lceil \cdot \rceil$ represents rounding, k$_{pscch}$ is greater than or equal to 1 and less than or equal to K$_{prs}$, and f$_k$ is an offset value.

In some implementations of the fifth aspect or the sixth aspect, the quantity of configured reference signal resources, the start position of the frequency domain resource, and an index of the frequency domain resource satisfy the following relationship:

$$RB_{lowest} = (k_{prs} + k_0)\left\lceil \frac{N_{RB}^{Total}}{K_{prs}} \right\rceil + f_k;$$

or

$$SubCH_{lowest} = (k_{prs} + k_0)\left\lceil \frac{N_{sub}^{Total}}{K_{prs}} \right\rceil + f_k,$$

where

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels included in the resource pool, $K_{prs}$ represents the quantity of configured reference signal resources, $k_{prs}$ represents an index of the reference signal resource, $\lceil \cdot \rceil$ represents rounding, $f_k$ is an offset value, and $f_k$ may be a preset constant. For example, $f_k$ may be an integer, for example, -1, -2, 0, 1, 2, or 3, or may be a constant value calculated based on a system parameter, for example, obtained through comparison between the quantity of sub-channels and the quantity of reference signal resources. When the quantity of sub-channels exceeds the quantity of reference signal resources, $f_k$ is a first value. When the quantity of sub-channels is equal to the quantity of reference signal resources, $f_k$ is a second value. When the quantity of sub-channels is less than the quantity of reference signal resources, $f_k$ is a third value. $k_0$ is a constant. Optionally, $k_0$ is an integer, for example, -2, -1, 0, 1, or 2. Optionally, $k_0$ may alternatively be a natural number, for example, 0, 1, or 2. Optionally, in other paragraphs of this application, $f_k$ and $k_0$ may have the same meaning as those in this paragraph. This is not limited in this application.

In some implementations of the fifth aspect, that the processing unit determines, based on a quantity of configured reference signal resources, a start position of a frequency domain resource occupied by a control channel includes: The processing unit determines, based on the quantity of configured reference signal resources and a first index, the start position of the frequency domain resource occupied by the control channel, where the first index is an index of a reference signal resource used by the transceiver unit to receive a reference signal; in other words, the transceiver unit is further configured to send a reference signal on a reference signal resource corresponding to the first index; in other words, the first index is an index of a first reference signal resource, the first reference signal resource is for sending a reference signal, and the first reference signal resource is one of configured reference signal resources.

In some implementations of the fifth aspect, that the transceiver unit sends the control information on the control channel based on the start position of the frequency domain resource includes: The transceiver unit sends the control information on the control channel based on a start position of a sub-band corresponding to the first index.

In some implementations of the sixth aspect, that the processing unit determines, based on a quantity of configured reference signal resources, a start position of a frequency domain resource occupied by a control channel includes: The processing unit determines, based on the quantity of configured reference signal resources and a first index, the start position of the frequency domain resource occupied by the control channel, where the first index is an index of a reference signal resource used by the transceiver unit to receive a reference signal; in other words, the transceiver unit is further configured to receive a reference signal on a reference signal resource corresponding to the first index; in other words, the first index is an index of a first reference signal resource, the first reference signal resource is for receiving a reference signal, and the first reference signal resource is one of configured reference signal resources.

In some implementations of the sixth aspect, that the transceiver unit sends the control information on the control channel based on the start position of the frequency domain resource includes: The transceiver unit receives the control information on the control channel based on a start position of a sub-band corresponding to the first index.

In some implementations of the fifth aspect or the sixth aspect, an index of each of the plurality of reference signal resources is determined based on identifiers of the plurality of reference signal resources, and an index of each of the plurality of sub-bands is determined based on a frequency domain position corresponding to each of the plurality of sub-bands.

For example, in some implementations of the fifth aspect or the sixth aspect, the processing unit is further configured to: determine an index of each of the plurality of reference signal resources based on identifiers of the plurality of reference signal resources; and determine an index of each of the plurality of sub-bands based on a frequency domain position corresponding to each of the plurality of sub-bands.

In some implementations of the fifth aspect or the sixth aspect, when a minimum value of the index is 0, the quantity of configured reference signal resources, the start position of the frequency domain resource, and the index of the frequency domain resource satisfy the following relationship:

$$RB_{lowest} = k_{prs} \left\lceil \frac{N_{RB}^{Total}}{K_{prs}} \right\rceil + f_k; \text{ or } SubCH_{lowest} = k_{prs} \left\lceil \frac{N_{sub}^{Total}}{K_{prs}} \right\rceil + f_k;$$

or

when a minimum value of the index is 1, the quantity of configured reference signal resources, the start position of the frequency domain resource, and the index of the frequency domain resource satisfy the following relationship:

$$RB_{lowest} = (k_{prs} - 1) \left\lceil \frac{N_{RB}^{Total}}{K_{prs}} \right\rceil + f_k; \text{ or } SubCH_{lowest} = (k_{prs} - 1) \left\lceil \frac{N_{sub}^{Total}}{K_{prs}} \right\rceil + f_k,$$

where

$k_{prs}$ represents the index of the frequency domain resource, $RB_{lowest}$ represents the start resource block of the frequency domain resource, $N_{RB}^{Total}$ represents the bandwidth of the resource pool, $SubCH_{lowest}$ represents a start sub-channel position of the frequency domain resource, $N_{sub}^{Total}$ represents the quantity of sub-channels included in the resource pool, $K_{prs}$ represents the quantity of configured resources, $\lceil \cdot \rceil$ represents rounding, $f_k$ and is the offset value.

In some implementations of the fifth aspect or the sixth aspect, the plurality of reference signal resources are located in one slot; or

the plurality of reference signal resources are located in a plurality of slots, and at least one of the plurality of slots includes a plurality of frequency domain resources respectively corresponding to a plurality of control channels.

In some implementations of the fifth aspect or the sixth aspect, the plurality of reference signal resources are respectively for sending a plurality of reference signals, and resource multiplexing is performed on the plurality of reference signals in at least one of the following multiplexing manners: frequency division multiplexing, time division multiplexing, or comb division multiplexing.

For technical effects of the method shown in the fifth aspect and the possible designs of the fifth aspect, refer to technical effects in the first aspect and the possible designs of the first aspect.

For technical effects of the method shown in the sixth aspect and the possible designs of the sixth aspect, refer to technical effects in the second aspect and the possible designs of the second aspect.

According to a seventh aspect, a communication apparatus is provided. The communication apparatus may be configured to implement the method in third aspect. The communication apparatus may be a first terminal device, or may be an apparatus (for example, a chip, a chip system, or a circuit) in the first terminal device, or may be an apparatus that can be used together with the first terminal device.

In a possible implementation, the communication apparatus may include modules or units that are in one-to-one correspondence with the method/operations/steps/actions described in the third aspect. The modules or units may be hardware circuits, may be software, or may be implemented by hardware circuits in combination with software.

The communication apparatus includes: a transceiver unit, configured to receive configuration information from a network device, where the configuration information is for configuring a reference signal resource; and a processing unit, configured to determine, based on the configuration information, a start position of a frequency domain resource occupied by a control channel, where the control channel is for carrying control information, and the control information indicates information related to the reference signal.

It should be understood that the foregoing transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This is uniformly described herein, and details are not described below again.

In some implementations of the seventh aspect, the transceiver unit is further configured to send the control information on the control channel based on the start position of the frequency domain resource.

In some implementations of the seventh aspect, the configuration information includes a comb size and a frequency domain offset value that correspond to the reference signal resource.

In some implementations of the seventh aspect, the method further includes: dividing a bandwidth of a resource pool into a plurality of sub-bands based on the comb size.

In some implementations of the seventh aspect, a start position of a first sub-band in a plurality of sub-bands of a bandwidth of a resource pool in which the configured reference signal resources are located is used as the start position of the frequency domain resource, a quantity of the plurality of sub-bands is related to the comb size, a ranking of the first sub-band in the plurality of sub-bands is related to the frequency domain offset value, and the start position of the sub-band includes any one of the following: a start resource block index, a start sub-channel index, a start frequency index, or a start subcarrier index. The frequency domain offset value may be understood as an RE offset or an RB offset.

For example, in some implementations of the seventh aspect, the processing unit is further configured to determine, based on the frequency domain offset value, a ranking of a first sub-band corresponding to the frequency domain resource in the plurality of sub-bands, where a start position of the first sub-band is the start position of the frequency domain resource, and the start position of the first sub-band includes any one of the following: a start resource block index, a start sub-channel index, a start frequency index, or a start subcarrier index.

When the bandwidth of the resource pool in which the reference signal resource is located is an integer multiple of the comb size, that the processing unit divides, based on the comb size, the bandwidth of the resource pool in which the reference signal resource is located into a plurality of sub-bands includes: The processing unit equally divides, based on the comb size, the bandwidth of the resource pool in which the reference signal resource is located into the plurality of sub-bands.

In some implementations of the seventh aspect, bandwidths of the plurality of sub-bands are the same.

In some implementations of the seventh aspect, the comb size, the offset value, and the start position of the frequency domain resource satisfy the following relationship:

$$RB_{lowest} = k_{prs,} \left\lceil \frac{N_{RB}^{Total}}{C_{prs}} \right\rceil + f_k; \text{ or } SubCH_{lowest} = k_{prs,} \left\lceil \frac{N_{sub}^{Total}}{C_{prs}} \right\rceil + f_k,$$

where

$k_{prs,}$ represents the offset value, $RB_{lowest}$ represents a start resource block position of the frequency domain resource, $N_{RB}^{Total}$ represents the bandwidth of the resource pool, $SubCH_{lowest}$ represents a start sub-channel position of the frequency domain resource, $N_{sub}^{Total}$ represents a quantity of sub-channels included in the resource pool, $C_{prs}$ represents the comb size, $\lceil \cdot \rceil$ represents rounding, $f_k$ is an offset value, and $f_k$ may be a preset constant. For example, $f_k$ may be an integer, for example, -1, -2, 0, 1, 2, or 3, or may be a constant value calculated based on a system parameter, for example, obtained through comparison between the quantity of sub-channels and the quantity of reference signal resources. When the quantity of sub-channels exceeds the quantity of reference signal resources, $f_k$ is a first value. When the quantity of sub-channels is equal to the quantity of reference signal resources, $f_k$ is a second value. When the quantity of sub-channels is less than the quantity of reference signal resources, $f_k$ is a third value.

For technical effects of the method shown in the seventh aspect and the possible designs of the seventh aspect, refer to technical effects in the third aspect and the possible designs of the third aspect.

According to an eighth aspect, a communication system is provided. The communication system includes a first terminal device and a second terminal device. The first terminal device is configured to perform the method according to any one of the first aspect and the possible implementations of the first aspect. The second terminal device is configured to perform the method according to any one of the second aspect and the possible implementations of the second aspect.

According to a ninth aspect, a communication system is provided. The communication system includes a first terminal device and a network device. The first terminal device is configured to perform the method according to any one of the third aspect and the possible implementations of the third aspect.

According to a tenth aspect, a computer-readable storage medium is provided. The computer-readable storage medium includes a computer program or instructions. When the computer program or the instructions are run on a computer, the method according to any one of the first aspect and the possible implementations of the first aspect is performed, the method according to any one of the second aspect and the possible implementations of the second aspect is performed, or the method according to any one of the third aspect and the possible implementations of the third aspect is performed.

According to an eleventh aspect, a computer program product is provided. The computer program product includes instructions. When the instructions are run on a computer, the method according to any one of the first aspect and the possible implementations of the first aspect is performed, the method according to any one of the second aspect and the possible implementations of the second aspect is performed, or the method according to any one of the third aspect and the possible implementations of the third aspect is performed.

According to a twelfth aspect, a communication apparatus is provided. The communication apparatus includes a logic circuit and an input/output interface. The input/output interface is configured to output and/or input a signal. The logic circuit is configured to perform the method according to any one of the first aspect and the possible implementations of the first aspect, the method according to any one of the second aspect and the possible implementations of the second aspect, or the method according to any one of the third aspect and the possible implementations of the third aspect.

**BRIEF DESCRIPTION OF DRAWINGS**

FIG. 1 is a diagram of a communication scenario to which technical solutions of this application are applicable;

FIG. 2 is a diagram of a plurality of resource pools;

FIG. 3 is a diagram of a transmission structure of a PSCCH and a PSSCH in new radio (new radio, NR);

FIG. 4 shows that frequency domain start RBs of a PSCCH and a PSSCH are the same;

FIG. 5 is a diagram of frequency division multiplexing of different users according to this application;

FIG. 6 shows PSCCH conflicts of different users;

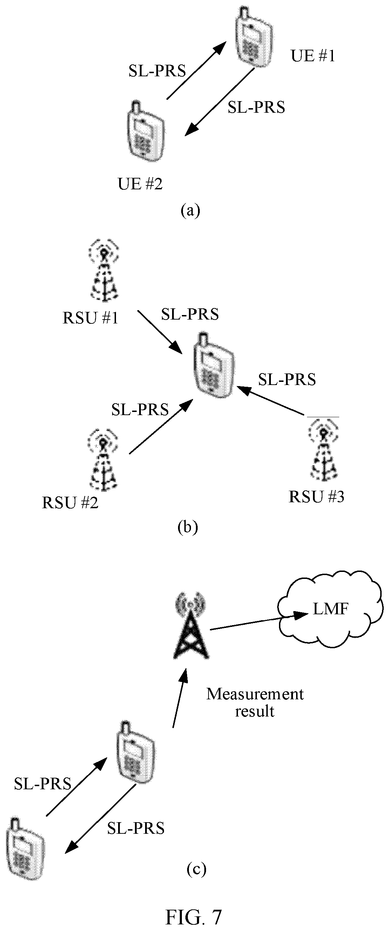

(a) to (c) in FIG. 7 are diagrams of SL positioning scenarios according to this application;

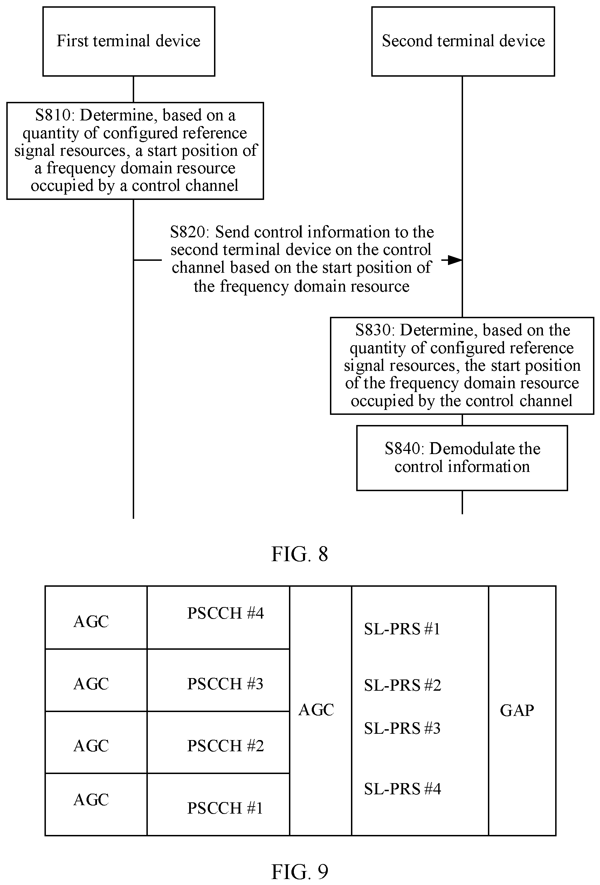

FIG. 8 is a schematic flowchart of a control information transmission method according to an embodiment of this application;

FIG. 9 shows configuration of a plurality of SL-PRS resources in one slot;

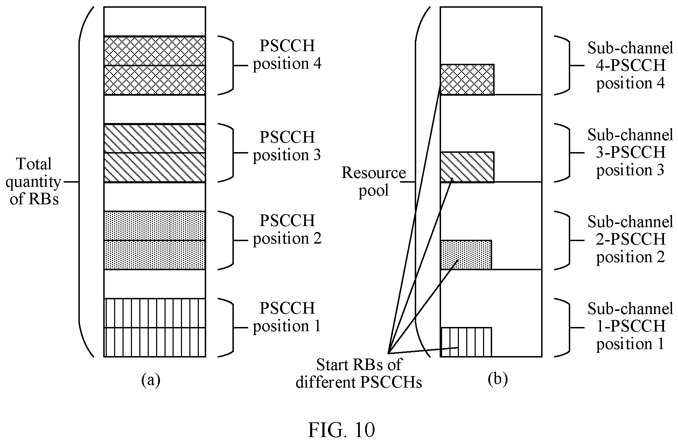

(a) and (b) in FIG. 10 are diagrams of frequency domain start positions of different PSCCHs according to an embodiment of this application;

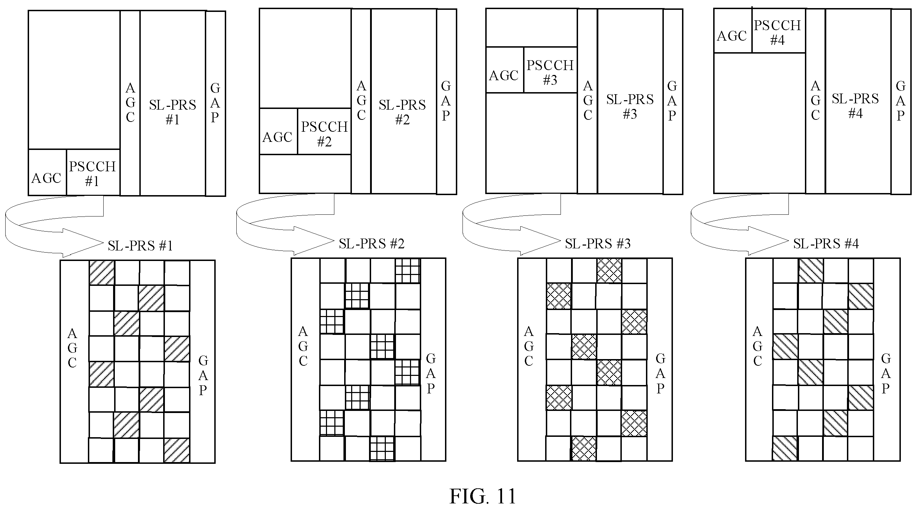

FIG. 11 shows that different SL-PRS resources correspond to different candidate resource positions of a PSCCH;

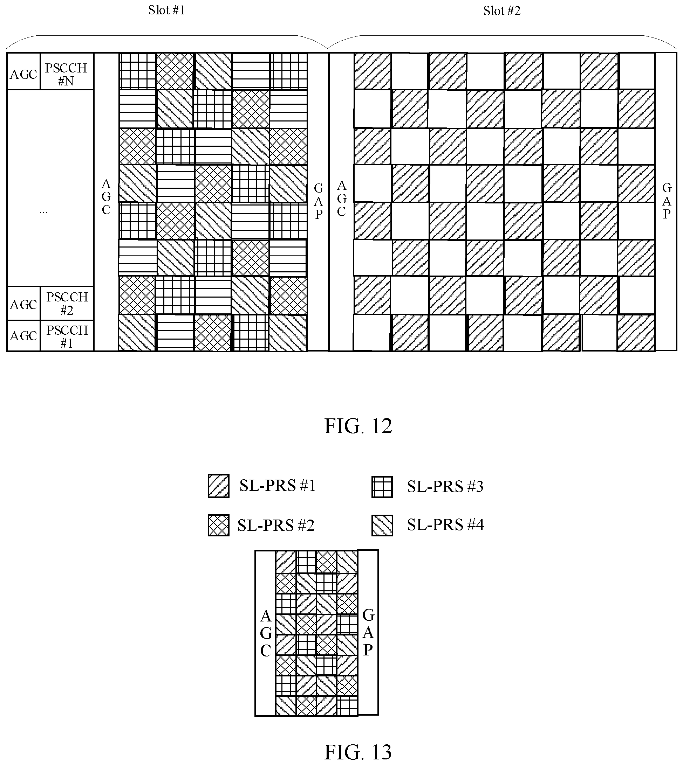

FIG. 12 shows configuration of a plurality of SL-PRS resources in a plurality of slots;

FIG. 13 shows a multiplexing manner of different SL-PRS resources;

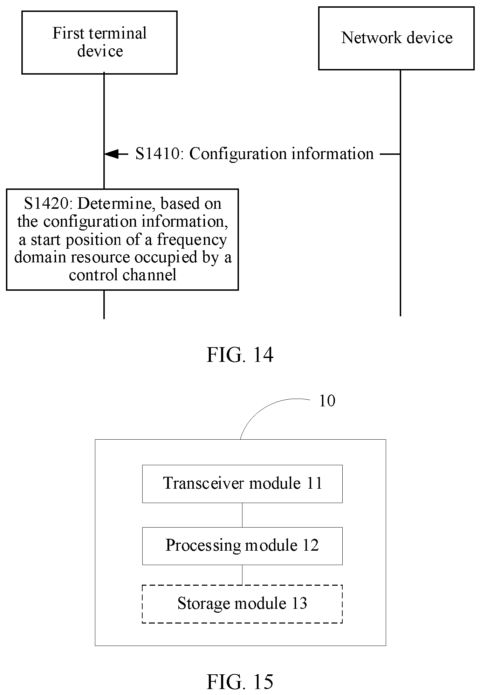

FIG. 14 is a schematic flowchart of another control information transmission method according to an embodiment of this application;

FIG. 15 is a block diagram of a communication apparatus 10 according to an embodiment of this application;

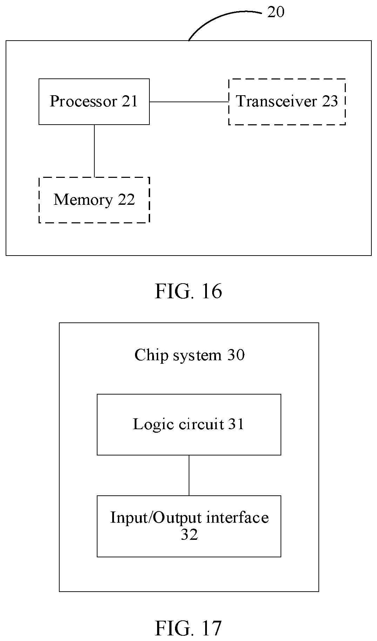

FIG. 16 is a diagram of another communication apparatus 20 according to an embodiment of this application; and

FIG. 17 is a diagram of a chip system 30 according to an embodiment of this application.

## DESCRIPTION OF EMBODIMENTS

Technical solutions of this application are described below with reference to the accompanying drawings.

The technical solutions in embodiments of this application are applicable to various communication systems, for example, a 5th generation (5th generation, 5G) system or an NR system, a wireless fidelity (wireless fidelity, Wi-Fi) system, a cellular system related to a 3rd generation partnership project (3rd generation partnership project, 3GPP), a communication system that supports convergence of a plurality of wireless technologies, a future-oriented evolved system, or the like. This is not limited.

With development of communication technologies, a mobile communication system not only supports conventional communication, but also supports, for example, device-to-device (device-to-device, D2D) communication, machine-to-machine (machine-to-machine, M2M) communication, machine-type communication (machine-type communication, MTC), and vehicle-to-everything (vehicle-to-everything, V2X) communication (which may also be referred to as internet of vehicles communication), for example, vehicle-to-vehicle (vehicle-to-vehicle, V2V) communication (which may also be referred to as vehicle-to-vehicle communication), vehicle-to-infrastructure (vehicle-to-infrastructure, V2I) communication (which may also be referred to as vehicle-to-infrastructure communication), vehicle-to-pedestrian (vehicle-to-pedestrian, V2P) communication (which may also be referred to as vehicle-to-pedestrian communication), and vehicle-to-network (vehicle-to-network, V2N) communication (which may also be referred to as vehicle-to-network communication).

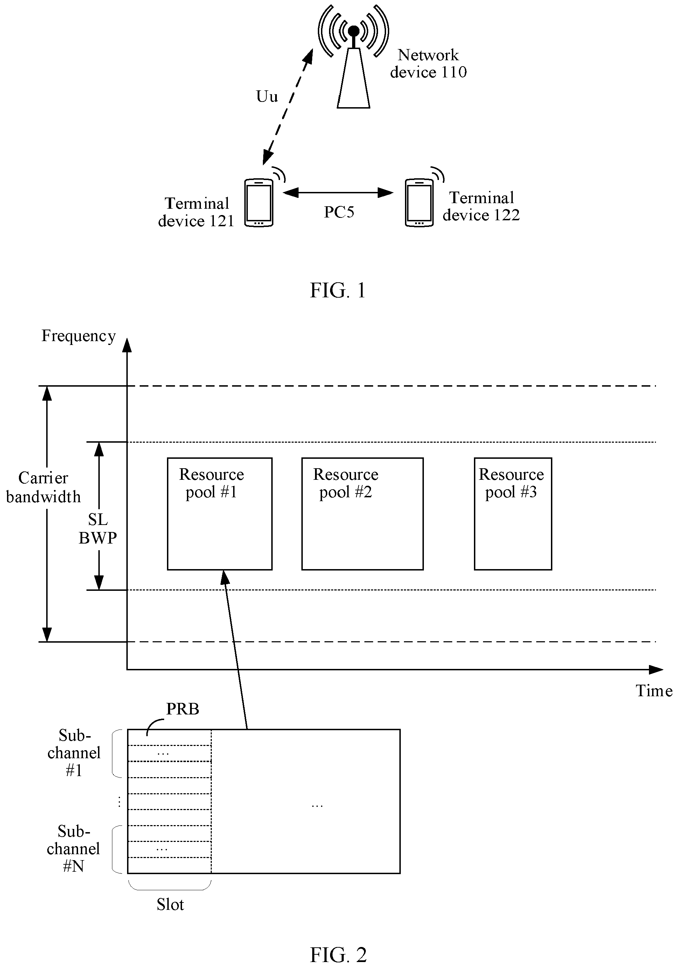

FIG. 1 is a diagram of an architecture of a communication system to which an embodiment of this application is applicable.

The communication system to which this embodiment of this application is applicable mainly includes a terminal device, for example, a terminal device 121 and a terminal device 122 shown in FIG. 1, and a network device, for example, a network device 110 shown in FIG. 1. In addition, the communication system mainly includes two communication interfaces, for example, a communication interface (a Uu interface) between the terminal device 121 and the network device 110 and a communication interface (a proximity-based service communication 5 (proximity-based service communication 5, PC5) interface) between the terminal device 121 and the terminal device 122. The Uu interface is for communication between the terminal device and the network device, and the PC5 interface is for sidelink communication between the terminal devices. A link used by the terminal device to send data to the network device on the Uu interface is referred to as an uplink (uplink), and a link used by the terminal device to receive data sent by the network device is referred to as a downlink (downlink). A link for data transmission between the terminal devices on the PC5 interface is referred to as a sidelink (sidelink) or a direct link. The sidelink is generally used in a scenario in which direct communication can be performed between devices, for example, device-to-device (device-to-device, D2D). In this scenario, data transmission between devices does not need to be performed via a network device. Vehicle-to-everything (vehicle-to-everything, V2X) communication may be considered as a case of D2D communication.

On the Uu interface, one or more of data and radio resource control (radio resource control, RRC) signaling are transmitted between the terminal device and the network device via a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. An RLC bearer includes an RLC entity and a corresponding logical channel (Logical Channel, LCH). Configuration of the radio bearer is configuration of a PDCP entity, an RLC entity, and a logical channel of the radio bearer. The configuration of the radio bearer needs to meet a quality of service (quality of service, QoS) requirement of a service transmitted via the radio bearer. On the Uu interface, the radio bearer is configured by the network device for the terminal device.

On the PC5 interface, one or more of data and RRC signaling are alternatively transmitted between the terminal device and the terminal device via a radio bearer. The radio bearer on the PC5 interface may be referred to as a sidelink radio bearer (sidelink radio bearer, SL RB). In a long term evolution (long term evolution, LTE) V2X system, radio bearers on a PC5 interface are respectively established by a transmit-end terminal device and a receive-end terminal device, and configuration of the radio bearer is pre-defined in a standard or is determined by the transmit-end terminal device and the receive-end terminal device.

In future communication, names of interfaces such as the Uu interface or the PC5 interface may remain unchanged, or may be replaced with other names. This is not limited in this application.

The terminal device in embodiments of this application may be briefly referred to as a terminal. The terminal device may be a device having a wireless transceiver function. The terminal device may be mobile or fixed. The terminal device may be deployed on land, including indoor or outdoor, handheld, or vehicle-mounted deployment, may be deployed on water (for example, on a ship), or may be deployed in air (for example, on aircraft, a balloon, or a satellite). The terminal device may include a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, a vehicle-mounted device, a wearable device, a terminal device in a 5th generation (5th generation, 5G) network, a terminal device in a further evolved public land mobile network (public land mobile network, PLMN), or the like. The terminal device may also be referred to as a user equipment (user equipment, UE) sometimes. Optionally, the terminal device may communicate with a plurality of access network devices by using different technologies. For example, the terminal device may communicate with an access network device supporting LTE, or may communicate with an access network device supporting 5G, or may be dual-connected to an access network device supporting LTE and an access network device supporting 5G. This is not limited in this application.

In this application, an apparatus configured to implement a function of the terminal device may be the terminal device, or may be an apparatus that can support the terminal device in implementing the function, for example, a chip system, a hardware circuit, a software module, or a combination of a hardware circuit and a software module. The apparatus may be installed in the terminal device or may be used together with the terminal device. In the technical solutions provided in this application, an example in which the apparatus configured to implement the function of the terminal device is the terminal device and the terminal device is a UE is used to describe the technical solutions provided in this application.

In this application, the chip system may include a chip, or may include a chip and another discrete component.

The network device in this embodiment of this application may also be referred to as an access network (radio access network, RAN) device.

The RAN device is a node or a device that connects the terminal device to a wireless network, and the RAN device may also be referred to as a base station. The RAN device, for example, includes but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, (for example, a home evolved NodeB, or a home NodeB, HNB), a baseband unit (base band unit, BBU), a transmission reception point (transmission reception point, TRP), a transmission point (transmission point, TP), and/or a mobile switching center. Alternatively, the access network device may be at least one of a central unit (central unit, CU), a distributed unit (distributed unit, DU), a central unit control plane (CU control plane, CU-CP) node, a central unit user plane (CU user plane, CU-UP) node, an integrated access and backhaul (integrated access and backhaul, IAB) node, a radio controller in a cloud radio access network (cloud radio access network, CRAN) scenario, or the like. Alternatively, the access network device may be a relay station, an access point, a vehicle-mounted device, a terminal device, a wearable device, an access network device in a 5G network, an access network device in a future evolved public land mobile network (public land mobile network, PLMN), or the like.

In this application, an apparatus configured to implement a function of the access network device may be the access network device, or may be an apparatus that can support the access network device in implementing the function, for example, a chip system, a hardware circuit, a software module, or a combination of a hardware circuit and a software module. The apparatus may be installed in the access network device or may be used together with the access network device. In the technical solutions provided in this application, an example in which the apparatus configured to implement the function of the access network device is the access network device and the access network device is a base station is used to describe the technical solutions provided in this application.

The architecture shown in FIG. 1 to which embodiments of this application are applicable is merely an example for description, and an architecture to which embodiments of this application are applicable is not limited thereto. Any architecture that can implement functions of the foregoing devices is applicable to embodiments of this application.

It should be further understood that the foregoing names are defined merely for distinguishing between different functions, and should not constitute any limitation on this application. This application does not exclude a possibility that another name is used in a 5G network and another future network. For example, in a 6G network, some or all of the foregoing devices may use terms in 5G, or may use other names or the like. Names of the interfaces between the devices in FIG. 1 are merely examples. In specific implementations, names of the interfaces may be other names. This is not specifically limited in this application. In addition, a name of a message (or signaling) transmitted between the foregoing devices is merely an example, and does not constitute any limitation on a function of the message.

For ease of understanding embodiments of this application, basic concepts in this application are first described below.

1. Resource pool (resource pool): A terminal device may perform data transmission by using a resource in a sidelink resource pool. For one resource pool, one or more contiguous physical resource blocks (physical resource blocks, PRBs) (also referred to as resource blocks (resource blocks, RBs)) may be configured in frequency domain, and one or more slots (slots) may be configured in time domain. A plurality of slots may be consecutive or nonconsecutive.

For ease of understanding of a meaning of the resource pool, a sidelink resource pool is described below by using an example with reference to FIG. 2. FIG. 2 is a diagram of a plurality of resource pools. A part of a spectrum used for an SL in a carrier bandwidth (carrier bandwidth) may be referred to as a sidelink bandwidth part SL BWP (sidelink bandwidth part). A plurality of resource pools, for example, three resource pools (a resource pool #1, a resource pool #2, and a resource pool #3) shown in FIG. 2, may be defined in the SL BWP. One of the resource pools is used as an example for description. A plurality of contiguous PRBs may be configured for one resource pool in frequency domain, a specific quantity of contiguous PRBs may form one sub-channel, and the terminal device may perform SL data transmission by using one or more sub-channels. In other words, a minimum unit granularity for sending or receiving SL data by the terminal device may be referred to as a sub-channel, and a quantity of PRBs on one sub-channel may be 10, 12, 15, 20, 25, 50, 75, or 100.

2. Resource: The resource is a time-frequency resource in a resource pool. A time domain resource may be represented by a symbol (symbol), a slot (slot), a mini-slot (mini-slot), a partial slot (partial slot), a sub-frame (sub-frame), a radio frame (frame), a sensing slot (sensing slot), or the like. A frequency domain resource may be represented as a resource element (resource element, RE), a resource block (resource block, RB), a sub-channel (sub-channel), a resource pool (resource pool), a bandwidth (bandwidth), a bandwidth part (bandwidth part, BWP), a carrier (carrier), a channel (channel), an interlace (interlace), or the like.

For ease of description, in this specification, an example in which a time domain resource is a slot and a frequency domain resource is an RB or a sub-channel is used to describe a resource for PSCCH transmission.

3. PSCCH and PSSCH: According to the Rel-16/Rel-17 NR protocol, a scheduling granularity of the PSCCH and/or a scheduling granularity of the PSSCH are/is in a unit of one slot in time domain, and are/is in a unit of one or more contiguous sub-channels in frequency domain.

A UE may send sidelink information on a resource, and one resource may carry a PSCCH, a PSSCH, and signals such as a demodulation reference signal (demodulation reference signal, DMRS) and a channel state information reference signal (channel state information reference signal, CSI-RS). The PSCCH carries first-stage sidelink control information (sidelink control information, SCI), and the PSSCH carries second-stage SCI and/or data.

(1) Transmission structure of the PSCCH:

The PSCCH carries the first-stage SCI. In time domain, the PSCCH occupies two or three orthogonal frequency division multiplexing (orthogonal frequency division multiplexing, OFDM) symbols starting from the $2^{nd}$ sidelink symbol. In frequency domain, a physical resource block (physical resource block, PRB) carrying the PSCCH starts from a lowest PRB of a lowest sub-channel of an associated PSSCH, and a quantity of PRBs occupied by the PSCCH is in a sub-band range of one PSSCH. The PSCCH includes {10, 12, 15, 20, 25} resource blocks (resource blocks, RBs). A specific value is pre-configured or configured by a network device. This is not limited in this application.

(2) Transmission structure of the PSSCH:

The PSSCH carries the second-stage SCI and data. In time domain, a minimum of two symbols and a maximum of 12 symbols are for carrying the PSSCH. In frequency domain, the PSSCH occupies $L_{subCh}$ contiguous sub-channels. In addition, in a slot, information sent on the 2nd symbol is copied on the 1st OFDM symbol for automatic gain control (Automatic Gain Control, AGC).

In addition, the UE may receive and send the PSSCH respectively in two consecutive slots. Therefore, after the PSSCH, an additional symbol (GAP symbol) may need to be added for transmission/reception conversion of the UE.

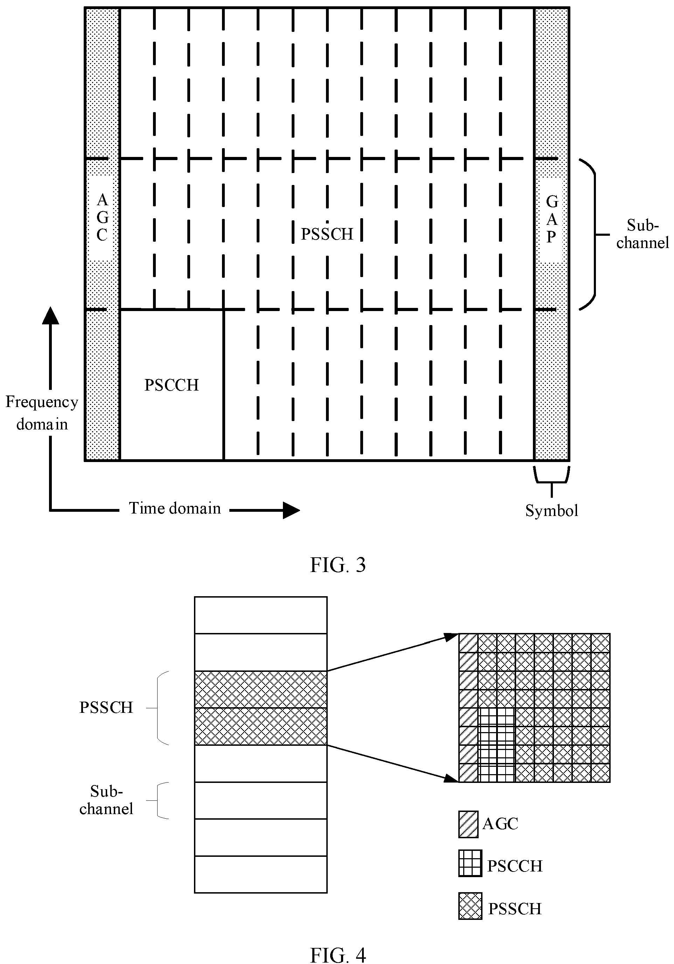

FIG. 3 is a diagram of a transmission structure of a PSCCH and a PSSCH in NR. The PSCCH and the PSSCH may be carried in one slot and on three sub-channels, where one slot includes 14 symbols.

In addition, it can be learned from FIG. 4 that an index of a frequency domain start (or lowest) RB of the PSCCH is the same as that of the PSSCH.

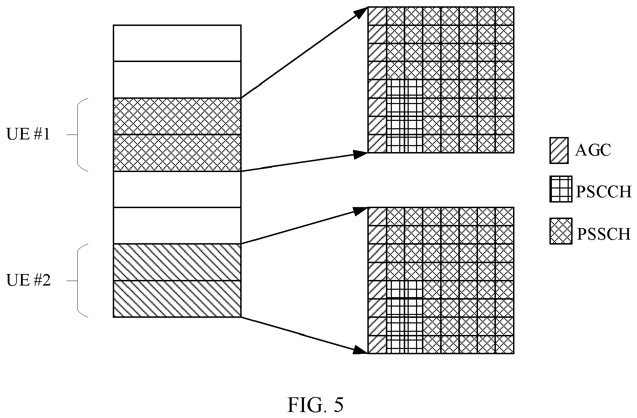

If different users occupy different sub-channels, PSCCHs of different users do not conflict with each other. FIG. 5 is a diagram of frequency division multiplexing of different users according to this application.

It can be learned from FIG. 5 that a UE #1 occupies a sub-channel #6 and a sub-channel #5, and a UE #2 occupies a sub-channel #2 and a sub-channel #1.

4. PSCCH conflicts between different users: In some special scenarios (for example, a positioning scenario), different users need to multiplex resources in a time-frequency orthogonal form or a comb division form to fully occupy a system bandwidth. For example, a bandwidth of a resource pool or a BWP bandwidth is fully occupied.

In this case, a problem lies in that, if a design concept of the PSCCH and a PSSCH is used as a reference, for example, an index of a lowest RB of the PSCCH is the same as that of an SL-PRS, when a plurality of users send the SL-PRS in one slot, PSCCHs of different users conflict with each other. As a result, the SCI cannot be correctly demodulated, the SL-PRS reference signal cannot be correctly received, and other users cannot sense resource reservation information.

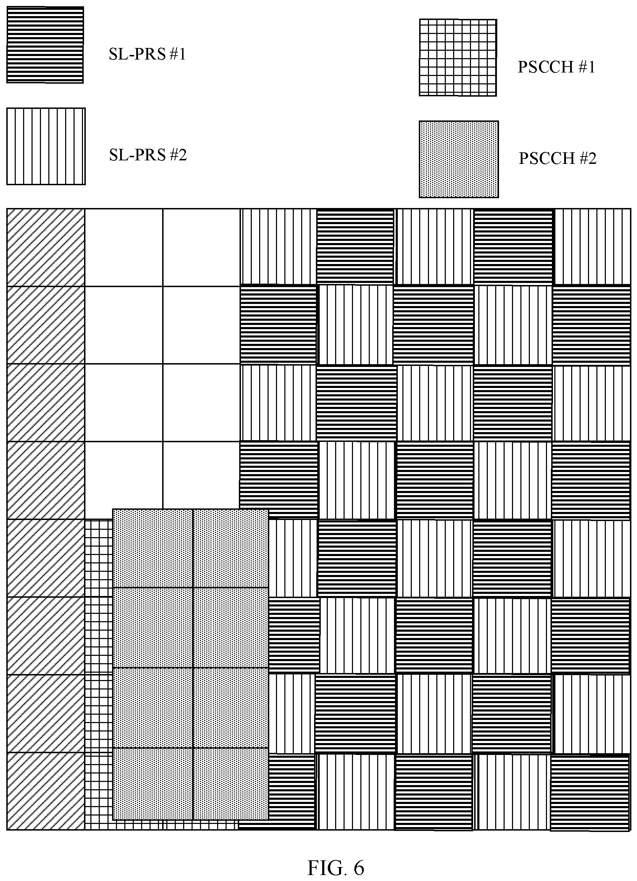

For ease of understanding, the PSCCH conflicts between different users are briefly described with reference to FIG. 6.

It can be learned from FIG. 6 that a UE #1 and a UE #2 send SL-PRSs (for example, an SL-PRS #1 and an SL-PRS #2 shown in FIG. 6) in a time-frequency multiplexing manner, and PSCCHs (for example, a PSCCH #1 and a PSCCH #2 shown in FIG. 6) between the UE #1 and the UE #2 conflict with each other.

Embodiments of this application relate to an SL positioning scenario. For example, there are three different architectures for sidelink positioning. For ease of understanding, descriptions are provided with reference to FIG. 7. (a) to (c) in FIG. 7 are diagrams of SL positioning scenarios according to this application.

(a) in FIG. 7 shows that two user equipments implement mutual positioning, for example, ranging or angle measurement, by sending a sidelink positioning reference signal in a scenario without network coverage.
(b) in FIG. 7 shows that one sidelink user implements sidelink positioning by receiving sidelink positioning reference signals sent by a plurality of road side units (Road Side Units, RSUs).
(c) in FIG. 7 shows that two sidelink users in a network coverage area implement mutual ranging or angle measurement by sending sidelink positioning reference signals under control of a base station, and send measurement results to a positioning center of a core network via the base station. The positioning center of the core network may be a location management function (Location management function, LMF) network element.

For ease of understanding of embodiments of this application, the following descriptions are provided.

First, in this application, the term "indicate" may include a direct indication and an indirect indication. When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers of the following processes do not mean execution sequences. The execution sequence of the processes should be determined based on functions and internal logic of the processes, and should not be construed as any limitation on the implementation processes of embodiments of this application. It should be understood that objects described in such a manner are interchangeable in proper cases, so as to describe solutions other than embodiments of this application. In addition, in embodiments of this application, words such as "S810" and "S820" are merely identifiers for ease of description, and do not limit a sequence of performing steps.

Third, in embodiments of this application, the terns such as "example" or "for example" are used for giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relative concept in a specific manner.

Fourth, "storage" in embodiments of this application may mean storage in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, a "protocol" in embodiments of this application may be a standard protocol in the communication field, for example, may include an NR protocol and a related protocol applied to a future communication system. This is not limited in this application.

Sixth, in embodiments of this application, "of (of)", "corresponding (corresponding, relevant)", "corresponding (corresponding)", and "associate (associate)" are interchangeably used sometimes. It should be noted that when a difference between the terms is not emphasized, meanings to be expressed are consistent.

Seventh, in this specification, the term "and/or" is merely used for describing an association relationship between associated objects, and indicates that three relationships may exist. For example, A and/or B may indicate the following three cases: Only A exists, both A and B exist, and only B exists. In addition, the character "/" in this specification usually indicates an "or" relationship between associated objects.

Eighth, in the method flowcharts in the accompanying drawings of this application, dashed boxes indicate optional steps.

It can be learned from the above that, in a scenario in which a plurality of users send SL-PRSs in a time-frequency multiplexing manner, a conflict occurs between PSCCHs of different users. This application provides a control information transmission method, to avoid a PSCCH conflict between different users. The control information transmission method is described below.

It should be understood that the control information transmission method provided in embodiments of this application may be applied to a system for SL communication, for example, the communication system shown in FIG. 1.

It should be further understood that a specific structure of an execution entity of the method provided in embodiments of this application is not specifically limited in embodiments, provided that communication can be performed according to the method provided in embodiments of this application by running a program that records code of the method provided in embodiments of this application. For example, the execution entity of the method provided in embodiments of this application may be a terminal device, or may be a functional module that can call a program and execute the program in the terminal device.

The control information transmission method provided in embodiments of this application is described below by using an example in which a terminal device selects a resource.

FIG. 8 is a schematic flowchart of a control information transmission method according to an embodiment of this application. The method includes the following step:

S810: A first terminal device determines, based on a quantity of configured reference signal resources, a start position of a frequency domain resource occupied by a control channel.

The configured reference signal resources include a plurality of reference signal resources. The plurality of reference signal resources are respectively for transmitting a plurality of reference signals, and the reference signals are in one-to-one correspondence with the reference signal resources.

Specifically, the quantity of configured reference signal resources in this embodiment may be understood as a pre-configured or configured resource for transmitting a reference signal. The configured reference signal resource may be understood as a related parameter configured for reference signal transmission. A specific form of the configured reference signal resource is not limited in this embodiment, and may be configuration that is related to a reference signal resource and that is defined in a current protocol. This embodiment mainly relates to the quantity of configured reference signal resources, and specific configuration content is not limited.

For example, the configured reference signal resource may be a resource that is pre-configured by a network device and that is for transmitting a reference signal. For example, the network device pre-configures four reference signal resources, and the four reference signal resources are respectively for transmitting four reference signals.

For another example, the configured reference signal may be configured by a network device in real time. For example, the network device configures four reference signal resources based on a communication status of a terminal device in a current system, and the four reference signal resources are respectively for transmitting the four reference signals.

The control channel is for carrying the control information, and the control information indicates information related to a first reference signal. For example, the control information indicates information such as time domain resource information, frequency domain resource information, a quantity of occupied symbols, or a sequence identifier (identifier, ID) of the first reference signal. The first reference signal is a reference signal transmitted by a reference signal resource in the plurality of reference signal resources occupied by the first terminal device. In other words, the first reference signal is a reference signal that is in a plurality of reference signals and that is to be sent by the first terminal device.

For example, the control information may be the foregoing SCI or sidelink positioning control information (Sidelink positioning control information, SPCI). A specific form of the control information is not limited in this embodiment, and the control information may be control information carried on a control channel defined in a current protocol.

This embodiment mainly relates to a problem that a conflict may occur between control information sent by different terminal devices on different control channels in a scenario in which a plurality of terminals respectively send a plurality of reference signals in a resource multiplexing manner. The configured reference signal resources include the plurality of reference signal resources, and the plurality of reference signal resources are respectively used by a plurality of terminal devices to send reference signals. The plurality of terminal devices respectively send control information on a plurality of control channels. The foregoing first terminal device is one of the plurality of terminal devices, the foregoing control channel is a control channel that is in the plurality of control channels and that corresponds to the first terminal device, and the foregoing first reference signal is a reference signal that is in the plurality of reference signals and that is to be sent by the first terminal.

For example, the reference signal in this embodiment may be a positioning reference signal (for example, an SL-PRS) or another reference signal sent in a time-frequency orthogonal form or a comb division form. A specific type of the reference signal is not limited in this embodiment. For ease of description, an example in which the reference signal is an SL-PRS is used below for description.

For example, the control channel in this embodiment may be the foregoing PSCCH or another channel carrying control information. A name of the control channel is not limited in this embodiment. For ease of description, an example in which the control channel is a PSCCH is used below for description.

In a possible implementation, that a first terminal device determines, based on a quantity of configured reference signal resources, a start position of a frequency domain resource occupied by a control channel includes:

The first terminal device divides a bandwidth of a resource pool into a plurality of sub-bands based on the quantity of configured reference signal resources. The quantity of the plurality of sub-bands is related to a quantity of configured resources. A start position of one of the plurality of sub-bands is the start position of the frequency domain resource, and the start position of the sub-band may be represented by a start resource block, or the start position of the sub-band may be represented by a start sub-channel when a concept of a sub-channel exists in a system.

In other words,

a start position of one of a plurality of sub-bands of a bandwidth of a resource pool in which the configured reference signal resources are located is used as the start position of the frequency domain resource, and a quantity of the plurality of sub-bands is related to the quantity of configured reference signal resources. Optionally, bandwidths of the plurality of sub-bands are the same.

In another possible implementation, the first terminal device may directly determine, based on the quantity of configured reference signal resources, the start position of the frequency domain resource occupied by the control channel. For example, a correspondence between the quantity of reference signal resources and the start position of the frequency domain resource occupied by the control channel is pre-configured.

In still another possible implementation, the first terminal device determines, via another device based on the quantity of configured reference signal resources, the start position of the frequency domain resource occupied by the control channel. For example, the first terminal device reports the quantity of reference signal resources to a management device, and the management device determines the start position of the frequency domain resource occupied by the control channel and notifies the first terminal device of the start position of the frequency domain resource.

It should be understood that the foregoing several implementations are merely examples for describing a manner of determining, based on the quantity of configured reference signal resources, the start position of the frequency domain resource occupied by the control channel, and do not constitute any limitation on the protection scope of this application. Other manners of determining, based on the quantity of configured reference signal resources, the start position of the frequency domain resource occupied by the control channel also fall within the protection scope of this application. Examples are not described herein one by one again.

For ease of description, the following uses an example in which the first terminal device determines the plurality of sub-bands based on the quantity of configured reference signal resources, and uses the start position of one of the plurality of sub-bands in the bandwidth of the resource pool in which the configured reference signal resources are located as the start position of the frequency domain resource for description.

For example, the plurality of sub-bands may be understood as candidate resource positions of the control channel.

For example, the quantity of configured reference signal resources is 4, and the bandwidth of the resource pool is divided into four sub-bands.

Further, when the bandwidth of the resource pool in which the configured reference signal resources are located is an integer multiple of the quantity of configured reference signal resources, that the first terminal device divides, based on the quantity of configured reference signal resources, a bandwidth of a resource pool in which the configured reference signal resources are located into a plurality of sub-bands includes: The first terminal device equally divides, based on the quantity of configured reference signal resources, the bandwidth of the resource pool in which the configured reference signal resources are located into the plurality of sub-bands.

For example, if the quantity of configured reference signal resources is 4, and the bandwidth of the resource pool in which the configured reference signal resources are located is 20 M, the first terminal device may equally divide the bandwidth of 20 M into four sub-bands, and each sub-band occupies a bandwidth of 5 M.

For another example, the quantity of configured reference signal resources is 4, the bandwidth of the resource pool in which the configured reference signal resources are located is 20 M, and the concept of the sub-channel is defined. For example, the bandwidth of 20 M includes four sub-channels, and each sub-channel occupies a bandwidth of 5 M. In this case, the first terminal device may equally divide the bandwidth of 20 M into four sub-bands, and each sub-band occupies the bandwidth of 5 M or each sub-band occupies one sub-channel.

In addition, when the bandwidth of the resource pool in which the configured reference signal resources are located is not an integer multiple of the quantity of configured reference signal resources, the first terminal device divides, based on the quantity of configured reference signal resources, the bandwidth of the resource pool in which the configured reference signal resources are located into the plurality of sub-bands, and bandwidths of different sub-bands may be different.

For example, if the quantity of configured reference signal resources is 4, and the bandwidth of the resource pool in which the configured reference signal resources are located is 21 M, the first terminal device may divide the bandwidth of 20 M into four sub-bands, bandwidths of three of the four sub-bands are 5 M, and a bandwidth of the other sub-band is 6 M.

It should be noted that, in this embodiment, the quantity of the plurality of sub-bands is related to the quantity of configured reference signal resources. This may be understood as that the quantity of the plurality of sub-bands is equal to the quantity of configured reference signal resources, or the quantity of sub-bands is calculated based on the quantity of configured reference signal resources.

For example, the quantity of configured reference signal resources is 4, and the quantity of sub-bands may be 4, or may be 5, or another value. In other words, for the quantity of sub-bands, refer to the quantity of configured reference signal resources.

It should be understood that the foregoing manner of dividing the bandwidth of the resource pool is merely an example, and does not constitute any limitation on the protection scope of this application. Details are not described herein again.

Specifically, the resource pool in this embodiment may be understood as follows: At least one resource pool is configured in a sidelink communication system, and each resource pool includes a segment of frequency resources and a group of time resources, for example, a group of slot units. A frequency domain resource and a time resource that are available to the resource pool may be indicated by using signaling. Resource scheduling in the sidelink communication system is performed based on a resource pool. To be specific, a user can only schedule, indicate, or reserve a resource, for example, a time resource, a frequency resource, or a positioning reference signal resource in a resource pool. The reference signal resource indicates a time-frequency resource that is for sending a reference signal and that is indicated by using configuration information of the reference signal.

For example, the bandwidth of the resource pool may alternatively be understood as a bandwidth occupied by an SL-PRS, or a bandwidth of an SL-PRS resource pool, or a BWP bandwidth, or a component carrier (component carrier, CC) bandwidth. The CC bandwidth indicates that a signal is configured on a CC, and is independent of a BWP or the BWP bandwidth.

For ease of understanding, a specific implementation in which the first terminal device determines the start position of the frequency domain resource occupied by the control channel in this implementation is described below with reference to specific examples (for example, Example 1 to Example 3). Details are not described herein again.

Specifically, after determining the start position of the frequency domain resource occupied by the control channel, the first terminal device can send the control information on the control channel based on the start position of the frequency domain resource. A method procedure shown in FIG. 8 further includes the following step:

S820: The first terminal device sends control information to a second terminal device on the control channel based on the start position of the frequency domain resource.

In this embodiment, a specific sending manner of sending the control information on the PSCCH is not limited. After the start position of the frequency domain resource occupied by the PSCCH is determined, the frequency domain resource occupied by the PSCCH may be further determined. For a manner of sending the control information on the PSCCH, refer to descriptions in existing related technologies. Details are not described herein again.

For example, the second terminal device includes a road side unit or another device that can implement a function of receiving and demodulating the control information sent by the first terminal device in an SL scenario. A specific form of the second terminal device is not limited in this embodiment.

It should be understood that in this embodiment, logic for determining, by a transmit end and a receive end, the start position of the frequency domain resource occupied by the PSCCH should be consistent. In other words, to correctly receive the control information sent on the PSCCH, the second terminal device needs to determine the start position of the frequency domain resource occupied by the PSCCH. The method procedure shown in FIG. 8 further includes the following step:

S830: The second terminal device determines, based on the quantity of configured reference signal resources, the start position of the frequency domain resource occupied by the control channel.

Specifically, a manner in which the second terminal device determines, based on the quantity of configured reference signal resources, the start position of the frequency domain resource occupied by the control channel is similar to that of the first terminal device. Details are not described herein again. A specific determining manner is subsequently described with reference to specific examples (for example, Example 1 to Example 3).

Further, after receiving the control information, the second terminal device may demodulate the control information. The method procedure shown in FIG. 8 further includes the following step:

S840: The second terminal device demodulates the control information.

It should be understood that, for a manner in which the second terminal device demodulates the control information in this embodiment, refer to descriptions in existing related technologies. Details are not described herein again.

In the control information transmission method shown in FIG. 8, the first terminal device may determine, based on the quantity of configured reference signal resources, the start position of the frequency domain resource occupied by the control channel (for example, the PSCCH), and the start position of the frequency domain resource occupied by the control channel is different from a start position of a frequency domain resource occupied by a shared channel (for example, the PSSCH), so that reference to a configuration manner of multiplexing a PSSCH and a PSCCH (where for example, the start position of the PSCCH is consistent with that of the PSSCH) is not required, but there are different determining manners. For the positioning reference signal and the control information, the start position of the PSCCH may be different from that of the SL-PRS, to improve flexibility of PSCCH resource allocation and reduce conflicts and collisions between terminals, so as to improve a probability of positioning availability and the like.

For association or allocation of a PSCCH resource and an SL-PRS resource, this application provides the following three possible solutions.

Solution 1: PSCCH resources are in one-to-one correspondence with associated SL-PRS resources in a same slot. The advantage of the one-to-one correspondence between the PSCCH resources and the associated SL-PRS resources is that when an SL-PRS resource is reserved, an associated PSCCH resource is also reserved. In this way, different UEs occupying different SL PRS resources send SCI by using different PSCCH resources (support a one-to-one mapping relationship between a PSCCH resource and an associated SL-PRS resource in the same slot. The advantage of incurring the one-to-one association between the PSCCH resource and SL-PRS resource is that when an SL-PRS resource is reserved, the associated PSCCH resource will be reserved as well. In this way, different UEs occupying different SL PRS resources will transmit SCI with different PSCCH resources).

Solution 2: The SL PRS resource is indicated by explicit signaling, and it is assumed that there is no association relationship between the SL PRS resource and the PSCCH resource. A problem of Solution 2 is that even if the SL-PRSs are orthogonal, orthogonal PSCCHs cannot be ensured, or dedicated PSCCH resource selection is required (explicit signaling of an SL PRS resource in the same slot, this alternative assumes no association between SL PRS and PSCCH resources. The problem of this alternative is that it cannot ensure an orthogonal PSCCH even an SL-PRS is orthogonal, or that it requires dedicated PSCCH resource selection).

Solution 3: An association relationship between a PSCCH resource and one or more associated SL-PRS resources in a same slot is supported, and the SL PRS resource is indicated by explicit signaling. In Solution 3, complexity is high and signaling overheads are high. For such a type of one-to-many mapping, it is assumed that a quantity of SL-PRS resources in the slot is far greater than a quantity of PSCCH candidate resources. However, in this case, for a single slot, a quantity of PSCCH candidates is upper bounded by available SL-PRS resources anyway. This is effectively simplified as one-to-one mapping. In addition, SCI overheads increase significantly. This is inappropriate (support a mapping relationship between a PSCCH resource and one or more associated SL-PRS resource(s) in the same slot and explicit signaling of SL PRS resource, this alternative will lead to the complexity and overhead increase. This one-to-many mapping assumes that the SL-PRS resources in the slot are way more than PSCCH candidates. However, in this case, our understanding is that for a single slot, the usable SL-PRS resource is upper bounded by the number of PSCCH candidates anyway, effectively reduced to one-to-one mapping. Furthermore, the SCI overhead will significantly increase, which is absolutely unjustified).

In conclusion, the association manner shown in Solution 1 is mainly considered in this embodiment. The one-to-one mapping relationship between the PSCCH resource and the associated SL-PRS resource in the same slot is supported (With regards to the SL-PRS configuration and/or SL-PRS time assignment information, support a one-to-one mapping relationship between a PSCCH resource and an associated SL-PRS resource in the same slot).

It should be understood that, in this implementation, explicit signaling of a specific SL PRS resource in a same slot is not required (In this case, there is no need of explicit signaling of which SL PRS resource for the same slot), and a quantity of PSCCH resources is the same as a quantity of SL-PRS resources (Same number of PSCCH resource(s) and SL-PRS resource(s)).

The SL PRS resource is associated with the PSCCH resource. For example, a start sub-channel $n_{subCH}^{start}$ of the PSCCH candidate resource associated with the SL PRS resource $k_{PRS}$ satisfies the following relationship: (In addition, we propose to simplify the association scheme between the SL PRS resource and PSCCH resource. For example, the start sub-channel $n_{subCH}^{start}$ of the PSCCH candidate resource associated with SL PRS resource $k_{PRS}$ is given by:)

$$n_{subCH}^{start} = k_{PRS} \left\lfloor \frac{N_{sub}^{Total}}{K_{PRS}} \right\rfloor,$$

where

$N_{sub}^{Total}$ represents a quantity of sub-channels in a dedicated resource pool, and $K_{PRS}$ represents a quantity of SL PRS resources (where $N_{subCH}^{Total}$ denotes the number of sub-channels within the dedicated resource pool, $K_{PRS}$ denotes the number of SL PRS resources). In addition, in this application, symbols such as SL-PRS, sl-prs, PRS, and prs have a same meaning, and all represent positioning reference signals. The symbols are only case-sensitive and may be replaced with each other.

A specific implementation in which the terminal device determines, based on the quantity of configured reference signal resources, the start position of the frequency domain resource occupied by the control channel is described below with reference to specific examples (for example, Example 1 to Example 3).

Example 1: The configured reference signal resource is an SL-PRS resource configured in one slot.

Optionally, the SL-PRS resource configured in one slot may be understood as an SL-PRS resource configured in a slot, or may be understood as an SL-PRS resource configured in a resource pool used for SL-PRS transmission. The resource pool used for SL-PRS transmission includes a plurality of slots, and an SL-PRS resource configured in each of the plurality of slots may be understood as an SL-PRS resource configured in the resource pool used for SL-PRS transmission.

For example, the resource pool used for SL-PRS transmission is a resource pool #1, and the resource pool #1 includes three slots (a slot #1, a slot #2, and a slot #3). If four SL-PRS resources are configured for the resource pool #1, this may be understood as that a same quantity of SL-PRS resources, that is, four SL-PRS resources, are configured in each of the slot #1, the slot #2, and the slot #3.

As shown in FIG. 9, in time domain, a PSCCH occupies symbols other than AGC symbols in the first several (for example, the first two or three) symbols in one slot, and the SL-PRS occupies symbols other than PSCCH symbols, the AGC symbols, and interval (GAP) symbols in the slot.

It should be understood that FIG. 9 merely shows functions of different symbols in one slot in time domain as an example, and does not constitute any limitation on the protection scope of this application. Functions of different symbols in one slot may alternatively be in another form. For example, the 2nd AGC (for example, AGC between the PSCCH and the SL-PRS in FIG. 9) shown in FIG. 9 may not exist.

When four SL-PRS resources (for example, an SL-PRS #1, an SL-PRS #2, an SL-PRS #3, and an SL-PRS #4 shown in FIG. 9) are pre-configured in the slot (or a resource pool in which the slot is located), a bandwidth of the resource pool may be divided into four sub-bands or four candidate positions (for example, a PSCCH #1, a PSCCH #2, a PSCCH #3, and a PSCCH #4 shown in FIG. 9). Each sub-band (or each candidate position) corresponds to one PSCCH, and each sub-band (or each candidate position) is for transmitting one PSCCH.

When a user UE #A occupies the SL-PRS #1 to send a positioning reference signal, the UE #A occupies one of the PSCCH #1 to the PSCCH #4 to send SPCI.

For example, the UE #A occupies the PSCCH #1 to send SPCI, where the SPCI indicates information related to the SL-PRS #1, for example, time domain resource information of the SL-PRS #1, frequency domain resource information of the SL-PRS #1, a quantity of symbols occupied by the SL-PRS #1, or a sequence ID of the SL-PRS #1.

When a UE #B occupies the SL-PRS #2 resource to send a positioning reference signal, the UE #B occupies one of the PSCCH #1 to the PSCCH #4 to send SPCI.

For example, the UE #B occupies the PSCCH #2 to send SPCI, where the SPCI indicates information related to the SL-PRS #2, for example, time domain resource information of the SL-PRS #2, frequency domain resource information of the SL-PRS #2, a quantity of symbols occupied by the SL-PRS #2, or a sequence ID of the SL-PRS #2.

For example, a position of a PSCCH is related to a quantity of pre-configured SL-PRSs, and frequency domain start positions of different PSCCHs are shown in FIG. 10. FIG. 10 is a diagram of frequency domain start positions of different PSCCHs according to an embodiment of this application.

It can be learned from (a) in FIG. 10 that, frequency domain start positions of different PSCCHs are shown at an RB granularity, and the frequency domain start positions of different PSCCHs are different RBs.

It can be learned from (b) in FIG. 10 that, frequency domain start positions of different PSCCHs are shown at a sub-channel granularity, the frequency domain start positions of different PSCCHs are different sub-channels, and a frequency domain start position of a PSCCH is a start (or lowest) RB of a sub-channel corresponding to the PSCCH; in other words, the frequency domain start positions of different PSCCHs are different RBs.

It should be understood that FIG. 10 merely shows examples of possible granularities of the frequency domain start position of the PSCCH, and does not constitute any limitation on the protection scope of this application. For example, the granularity may be an RE granularity. Details are not described herein again.

Specifically, a quantity of reference signals of a configured resource, the start position of the frequency domain resource, and an index of the frequency domain resource satisfy the following relationship:

$$RB_{lowest} = (k_{pscch} - 1)\left\lceil \frac{N_{RB}^{Total}}{K_{prs}} \right\rceil + f_k;$$

or

$$SubCH_{lowest} = (k_{pscch} - 1)\left\lceil \frac{N_{sub}^{Total}}{K_{prs}} \right\rceil + f_k,$$

where

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels included in the resource pool, $K_{prs}$ represents, $k_{pscch}$ represents the index of the frequency domain resource, $\lceil \cdot \rceil$ represents rounding, $k_{pscch}$ is greater than or equal to 1 and less than or equal to $K_{prs}$, and $f_k$ is an offset value. $f_k$ may be a fixed offset. For example, a value of $f_k$ may be 0, 1, 2, ..., or another natural number. This is not limited in this example.

Alternatively, a quantity of reference signals of a configured resource, the start position of the frequency domain resource, and an index of the frequency domain resource satisfy the following relationship:

$$RB_{lowest} = k_{pscch}\left\lceil \frac{N_{RB}^{Total}}{K_{prs}} \right\rceil + f_k;$$

or

$$SubCH_{lowest} = k_{pscch}\left\lceil \frac{N_{sub}^{Total}}{K_{prs}} \right\rceil + f_k,$$

where

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels included in the resource pool, $K_{prs}$ represents the quantity of configured reference signal resources, $k_{pscch}$ represents the index of the frequency domain resource, $\lceil \cdot \rceil$ represents rounding, $k_{pscch}$ is greater than or equal to 1 and less than or equal to $K_{prs}$, $f_k$ is an offset value, and $f_k$ may be a preset constant. For example, $f_k$ may be an integer, for example, -1, -2, 0, 1, 2, or 3, or may be a constant value calculated based on a system parameter, for example, obtained through comparison between the quantity of sub-channels and the quantity of reference signal resources. When the quantity of sub-channels exceeds the quantity of reference signal resources, $f_k$ is a first value. When the quantity of sub-channels is equal to the quantity of reference signal resources, $f_k$ is a second value. When the quantity of sub-channels is less than the quantity of reference signal resources, $f_k$ is a third value.

Alternatively, a quantity of reference signals of a configured resource, the start position of the frequency domain resource, and an index of the frequency domain resource satisfy the following relationship:

$$RB_{lowest} = (k_{prs} + k_0)\left\lceil \frac{N_{RB}^{Total}}{K_{prs}} \right\rceil + f_k;$$

or

$$SubCH_{lowest} = (k_{prs} + k_0)\left\lceil \frac{N_{sub}^{Total}}{K_{prs}} \right\rceil + f_k,$$

where

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels included in the resource pool, $K_{prs}$ represents the quantity of configured reference signal resources, $k_{prs}$ represents an index of the reference signal resource, $\lceil \cdot \rceil$ represents rounding, $f_k$ is an offset value, and $f_k$ may be a preset constant. For example, $f_k$ may be an integer, for example, -1, -2, 0, 1, 2, or 3, or may be a constant value calculated based on a system parameter, for example, obtained through comparison between the quantity of sub-channels and the quantity of reference signal resources. When the quantity of sub-channels exceeds the quantity of reference signal resources, $f_k$ is a first value. When the quantity of sub-channels is equal to the quantity of reference signal resources, $f_k$ is a second value. When the quantity of sub-channels is less than the quantity of reference signal resources, $f_k$ is a third value. $k_0$ is a constant. Optionally, $k_0$ is an integer, for example, -2, -1, 0, 1, or 2. Optionally, $k_0$ may alternatively be a natural number, for example, 0, 1, or 2.

For example, the index of the reference signal resource may be an identifier or an ID of the reference signal resource, or may be obtained through calculation based on configuration information, an identifier, or an ID of a reference signal. For example, the index of the reference signal resource is obtained by sorting IDs of the reference signal resources in order.

In a possible implementation, $k_{prs}$ may be an ID of a reference signal, as shown in Table A below.

Table A

| $k_{prs}$ corresponding to a reference signal resource | ID of the reference signal resource |
|---|---|
| 0 | 0 |
| 1 | 1 |
| 2 | 2 |

In another possible implementation, $k_{prs}$ is obtained by sorting IDs of the reference signal resources in order, as shown in Table B below.

Table B

| $k_{prs}$ corresponding to a reference signal resource | ID of the reference signal resource |
|---|---|
| $0+k_0$ | 5 |
| $1+k_0$ | 12 |
| $2+k_0$ | 10 |

$k_0$ is a fixed constant, for example, 0, 1, 2, or 3. The frequency domain start position of the foregoing control channel is a frequency domain position in the resource pool. For example, if the frequency domain start position is 0, it indicates a lowest frequency, a lowest sub-channel, or a lowest RB of the resource pool. In other words, an absolute frequency domain position of the control channel needs to be calculated by using the lowest frequency of the resource pool as a reference.

In Example 1, the terminal device may determine a quantity of candidate frequency domain resources of the PSCCH based on a quantity of configured SL-PRS resources, and may select, when sending the PSCCH, one candidate resource from the candidate frequency domain resources of the PSCCH to send the PSCCH. A probability that different terminal devices select a same candidate resource is low, so that a probability of a conflict between SCI sent by different terminal devices on the PSCCH can be reduced. Further, in the method for determining a PSCCH resource shown in Example 1, complexity of blind detection of the PSCCH is low.

Example 2: The pre-configured reference signal resource is an SL-PRS resource configured in one slot, and an index of the SL-PRS resource is for determining a position of a PSCCH corresponding to the SL-PRS.

In Example 1, the method for determining the quantity of candidate resources of the PSCCH based on the quantity of configured SL-PRS resources is provided. In Example 2, for a plurality of candidate resource positions, a method for further determining, based on an index of the SL-PRS resource, the position of the PSCCH corresponding to the SL-PRS is provided, that is, each SL-PRS resource corresponds to a frequency domain position of a PSCCH corresponding to an SL-PRS.

Specifically, the terminal device determines an index of each of a plurality of SL-PRS resources based on identifiers of the plurality of SL-PRS resources, and the terminal device determines an index of each of the plurality of sub-bands based on a frequency domain position (or a frequency) corresponding to each of the plurality of sub-bands.

In other words, the index of each of the plurality of SL-PRS resources is determined based on the identifiers of the plurality of SL-PRS resources, and the index of each of the plurality of sub-bands is determined based on the frequency domain position corresponding to each of the plurality of sub-bands.

For example, three SL-PRS resources are configured, and the three SL-PRS resources include an SL-PRS #1, an SL-PRS #2, and an SL-PRS #3. Identifiers of the SL-PRS #1, the SL-PRS #2, and the SL-PRS #3 are respectively an ID #1, an ID #10, and an ID #11. A plurality of SL-PRSs, that is, the SL-PRS #1, the SL-PRS #2, and the SL-PRS #3 may be re-encoded based on the identifiers of the SL-PRS #1, the SL-PRS #2, and the SL-PRS #3 (for example, in descending order or ascending order). For example, the three reference signal resources are re-encoded in descending order of the identifiers of the SL-PRS resources, to obtain that indexes of the SL-PRS #1, the SL-PRS #2, and the SL-PRS #3 are 1, 2, and 3 respectively. Further, a quantity of sub-bands is equal to a quantity of configured SL-PRS resources. The three sub-bands include a sub-band #1, a sub-band #2, and a sub-band #3, and frequency domain positions of the sub-band #1, the sub-band #2, and the sub-band #3 are respectively 2.5 M, 7.5 M, and 12.5 M. A plurality of sub-bands, that is, the sub-band #1, the sub-band #2, and the sub-band #3 may be encoded based on the frequency domain positions of the sub-band #1, the sub-band #2, and the sub-band #3 (for example, in descending order or ascending order). For example, the three sub-bands are encoded in descending order of the frequency domain positions of the sub-bands, to obtain that indexes of the sub-band #1, the sub-band #2, and the sub-band #3 are respectively 1, 2, and 3.

Specifically, the terminal device sends (or receives) the first reference signal on a resource whose index is a first index, and sends (or receives) the control information on the control channel based on a start position of a sub-band corresponding to the first index.

In a possible implementation, the sub-band corresponding to the first index may be a sub-band whose index is the first index.

For example, the first index is 1, and the index of the sub-band corresponding to the first index is 1.

In another possible implementation, the sub-band corresponding to the first index may be a sub-band whose index is related to the first index. For example, the index of the SL-PRS resource is in one-to-one correspondence with the index of the sub-band (where if the index of the SL-PRS resource is 1, the index of the corresponding sub-band is 3; if the index of the SL-PRS resource is 2, the index of the corresponding sub-band is 1; and if the index of the SL-PRS resource is 3, the index of the corresponding sub-band is 2). When the first index is 1, the index of the sub-band corresponding to the first index is 3.

Specifically, the one-to-one correspondence between the index of the SL-PRS resource and the index of the sub-band may be stored in the terminal device in a form of a preset table.

For example, a relationship between the index of the SL-PRS resource and the index of the sub-band is shown in Table 1 and Table 2 below.

Table 1

| Index of an SL-PRS resource | Index of a sub-band |
|---|---|
| 1 | 1 |

(continued)

| Index of an SL-PRS resource | Index of a sub-band |
|---|---|
| 2 | 2 |
| 3 | 3 |
| ... | ... |

A case shown in Table 1 indicates that the index of the SL-PRS resource and the index of the sub-band are the same.

Table 2

| Index of an SL-PRS resource | Index of a sub-band |
|---|---|
| 1 | 3 |
| 2 | 1 |
| 3 | 2 |
| ... | ... |

A case shown in Table 2 indicates that the index of the SL-PRS resource is in one-to-one correspondence with the index of the sub-band.

For ease of understanding, with reference to FIG. 11, a case in which different SL-PRS resources correspond to different candidate resource positions of a PSCCH is described. As shown in FIG. 11, different SL-PRS resources correspond to different candidate resource positions of the PSCCH.

It can be learned from FIG. 11 that an SL-PRS #1 resource to an SL-PRS #4 resource respectively correspond to a candidate resource #1 of the PSCCH to a candidate resource #4 of the PSCCH. In addition, it can be learned from

FIG. 11 that SPCI #1 sent on the candidate resource #1 of the PSCCH indicates information related to the SL-PRS #1 resource, and SPCI #2 sent on the candidate resource #2 of the PSCCH indicates information related to the SL-PRS #2 resource, SPCI #3 sent on the candidate resource #3 of the PSCCH indicates information related to the SL-PRS #3 resource, and SPCI #4 sent on the candidate resource #4 of the PSCCH indicates information related to the SL-PRS #4 resource.

In other words, after determining four candidate resource positions of the PSCCH according to the method shown in Example 1, the first terminal does not randomly select a candidate resource position from the candidate resource positions as a resource of the PSCCH, but determines, based on the SL-PRS resource occupied for sending the SL-PRS, a specific candidate resource of the PSCCH as a resource of the PSCCH.

For example, the first terminal may perform joint encoding on the four configured SL-PRS resources. The joint encoding manner includes: encoding indexes of different SL-PRS resources as 1, 2, 3, and 4, or 0, 1, 2, and 3 based on resource IDs or in another encoding manner, that is, one SL-PRS resource corresponds to one identifier.

Then, the first terminal encodes the four determined candidate resource positions of the PSCCH as 1, 2, 3, and 4, or 0, 1, 2, and 3, or other codes in ascending order of frequencies. That is, one candidate resource position of the PSCCH corresponds to one index. An encoding manner of the first terminal for the plurality of SL-PRS resources is the same as an encoding manner for the candidate resource positions of the PSCCH.

For example, if the indexes of the four SL-PRS resources are respectively 1, 2, 3, and 4, the indexes of the four candidate resource positions of the PSCCH are respectively 1, 2, 3, and 4.

For example, if the indexes of the four SL-PRS resources are respectively 0, 1, 2, and 3, the indexes of the four candidate resource positions of the PSCCH are respectively 0, 1, 2, and 3.

When the terminal sends the SL-PRS on the SL-PRS resource whose index is 1, correspondingly, the terminal sends the SCI on the PSCCH at the candidate position that is of the PSSCH and whose index is 1. Alternatively, when the terminal receives the SL-PRS on the SL-PRS resource whose index is 1, correspondingly, the terminal receives the SCI on the PSCCH at the candidate position that is of the PSSCH and whose index is 1.

Specifically, a formula for calculating the frequency domain start position of the PSCCH may be expressed as follows:

When the index of the SL-PRS resource is encoded from 0:

$$RB_{lowest} = k_{prs} \left\lceil \frac{N_{RB}^{Total}}{K_{prs}} \right\rceil + f_k; \text{ or } SubCH_{lowest} = k_{prs} \left\lceil \frac{N_{sub}^{Total}}{K_{prs}} \right\rceil + f_k;$$

or

when the index of the SL-PRS resource is encoded from 1:

$$RB_{lowest} = (k_{prs} - 1) \left\lceil \frac{N_{RB}^{Total}}{K_{prs}} \right\rceil + f_k; \text{ or } SubCH_{lowest} = (k_{prs} - 1) \left\lceil \frac{N_{sub}^{Total}}{K_{prs}} \right\rceil + f_k,$$

where

$k_{prs}$ represents the index of the frequency domain resource, $RB_{lowest}$ represents the start resource block of the frequency domain resource, $N_{RB}^{Total}$ represents the bandwidth of the resource pool, $SubCH_{lowest}$ represents a start sub-channel position of the frequency domain resource, $N_{sub}^{Total}$ represents the quantity of sub-channels included in the resource pool, $K_{prs}$ represents a quantity of pre-configured resources, $\lceil \cdot \rceil$ represents rounding, and $f_k$ is an offset value.

For example, $f_k$ identifies a fixed offset value. The offset value may be related to the index, or may be irrelevant to the index. A value of the offset value may be 0, 1, 2, ..., or another natural number. This is not limited in this example.

Compared with Example 1, in Example 2, a mapping relationship between the candidate resource position of the PSCCH and the SL-PRS resource is specifically designed, and a specific start frequency of the PSCCH is determined based on the index of the SL-PRS by encoding the configured SL-PRS resource. This avoids a conflict between SCI sent by different terminal devices on the PSCCH.

Example 3: The configured reference signal resource is an SL-PRS resource configured in a plurality of slots.

In Example 1 and Example 2, the candidate resource positions of the PSCCH are determined based on the quantity of SL-PRS resources configured in a slot. In Example 3, a method for jointly encoding SL-PRS resources in a plurality of slots to determine candidate resource frequency domain positions of a PSCCH is designed.

Specifically, when a plurality of resources are located in a plurality of slots, at least one of the plurality of slots includes a plurality of frequency domain resources respectively corresponding to a plurality of PSCCHs.

In a possible implementation, odd-numbered slots include candidate resource positions of the PSCCH, and even-numbered slots are all used for SL-PRS sending.

In another possible implementation, even-numbered slots include candidate resource positions of the PSCCH, and odd-numbered slots are all used for SL-PRS sending.

In still another possible implementation, the 1st slot includes a candidate resource position of the PSCCH, and the remaining slots are all used for SL-PRS sending.

The foregoing several implementations are merely examples for description. When the PSCCHs in the plurality of slots are jointly designed, at least one of the plurality of slots includes a candidate resource position of the PSCCH. A specific slot or specific slots including a candidate resource position of the PSCCH are not limited in this embodiment.

For ease of description, joint encoding of two slots is used as an example for description. For example, a slot 1 represents an odd-numbered slot, and a slot 2 represents an even-numbered slot. As shown in FIG. 12, the slot 1 includes a PSCCH resource and an SL-PRS resource, and the slot 2 includes only an SL-PRS resource. SCI corresponding to an SL-PRS in the slot 2 is sent on the PSCCH resource in the slot 1.

It is assumed that four resources are configured in the slot 1, and two resources are configured in the slot 2. In this case, the two slots have six SL-PRS resources in total. Therefore, there are six PSCCH candidate positions in total in the slot 1, which respectively correspond to an SL-PRS #1 to an SL-PRS #6.

It should be understood that the foregoing description is merely an example of two slots, and may also be extended to other cases. For example, SL-PRSs in three or more slots are jointly encoded to share PSCCH resources in a same slot. In addition, the slot 1 may alternatively include only a PSCCH resource, and does not include an SL-PRS resource or the like.

The PSCCHs of the SL-PRS resources in the plurality of slots are jointly designed, so that resource overheads of the PSCCH can be effectively reduced. For example, if a PSCCH in each slot occupies three symbols, overheads are 3/14, and if two slots are jointly encoded, overheads of the PSCCH are 3/28, which is reduced by a half. This improves SL-PRS resource utilization and an SL-PRS capacity or a user capacity.

For example, if a PSCCH resource exists in each slot, overheads of the PSCCH resources are excessively high for positioning. In the method for jointly designing PSCCHs in the plurality of slots provided in Example 3, PSCCH resources exist only in some slots, and joint indication is performed on an SL-PRS in a current slot (a slot in which a PSCCH resource exists) and an SL-PRS in another slot, so that resource overheads of the PSCCH can be effectively reduced.

In addition, a multiplexing manner between the plurality of SL-PRS resources is not limited in this embodiment of this application. For example, comb division, or frequency division, time division, comb division, and the like may be performed on the SL-PRS #1 to the SL-PRS #4. The comb division indicates that different SL-PRS resources are orthogonal to each other like a comb (comb), and this may be understood as a specific time division and frequency division multiplexing manner. For example, a comb division multiplexing manner is used for the SL-PRS #1 to the SL-PRS #4 in FIG. 11.

For ease of understanding, a multiplexing manner between SL-PRS resources is briefly described with reference to FIG. 13.

It can be learned from FIG. 13 that a comb division multiplexing manner is used between a plurality of SL-PRS resources.

In the control information transmission method shown in FIG. 8, a method for determining a position of a PSCCH resource when a specific quantity of SL-PRS resources is pre-configured is considered. This application further provides another communication manner, and the manner is about how a terminal device determines a position of a PSCCH resource when a quantity of SL-PRS resources is not configured, and a network device configures an SL-PRS resource for the terminal on demand based on a request of the terminal device. The control information transmission method is described below in detail with reference to FIG. 14.

FIG. 14 is a schematic flowchart of another control information transmission method according to an embodiment of this application. The method includes the following steps.

S1410: A first terminal device receives configuration information from a network device.

Specifically, the configuration information is for configuring a reference signal resource.

S1420: The first terminal determines, based on the configuration information, a start position of a frequency domain resource occupied by a control channel.

The control channel is for carrying control information, and the control information indicates information related to the reference signal.

In a possible implementation, the configuration information includes a comb size and a frequency domain offset value that correspond to a reference signal.

In another possible implementation, the configuration information includes an identifier (identifier, ID) of the reference signal resource, information about a PSCCH carried in configuration of the reference signal resource, information about SCI carried in configuration of the reference signal resource, or the like. The information about the PSCCH may be an index of the PSCCH, and the index of the PSCCH indicates a frequency domain start position of the PSCCH. The information about the SCI may also indicate a frequency domain start position of the PSCCH.

It should be understood that the foregoing several implementations are merely examples for describing specific content included in the configuration information, and do not constitute any limitation on the protection scope of this application. Other configuration information of the reference signal resource that can be used for determining the start position of the frequency domain resource occupied by the control channel also falls within the protection scope of this application. Examples are not described herein one by one again.

For ease of description, an example in which the configuration information includes the comb size and the frequency domain offset value that correspond to the reference signal is used below for description.

In a possible implementation, the first terminal uses a start position of a first sub-band in a plurality of sub-bands of a bandwidth of a resource pool in which the reference signal resource is located is used as the start position of the frequency domain resource, a quantity of the plurality of sub-bands is related to the comb size, a ranking of the first sub-band in the plurality of sub-bands is related to the frequency domain offset value, and the start position of the sub-band includes any one of the following: a start resource block index, a start sub-channel index, a start frequency index, or a start subcarrier index.

In other words, the first terminal divides, based on the comb size, a bandwidth of a resource pool in which the reference signal resource is located into a plurality of sub-bands, and a quantity of the plurality of sub-bands is related to the comb size. The first terminal determines, based on the frequency domain offset value, a ranking of a sub-band corresponding to the frequency domain resource in the plurality of sub-bands, and a start position of the sub-band corresponding to the frequency domain resource is the start position of the frequency domain resource.

In another possible implementation, the first terminal may directly determine, based on the comb size and the frequency domain offset value that correspond to the reference signal , the start position of the frequency domain resource occupied by the control channel. For example, a correspondence between the comb size and the frequency domain offset value that correspond to the reference signal and the start position of the frequency domain resource occupied by the control channel is pre-configured.

It should be understood that the foregoing several implementations are merely examples for describing a manner of determining, based on the comb size and the frequency domain offset value that correspond to the reference signal , the start position of the frequency domain resource occupied by the control channel, and do not constitute any limitation on the protection scope of this application. Other manners of determining, based on the comb size and the frequency domain offset value that correspond to the reference signal , the start position of the frequency domain resource occupied by the control channel also fall within the protection scope of this application. Examples are not described herein one by one again.

For ease of description, the following uses an example in which the first terminal determines the plurality of sub-bands based on the comb size and the frequency domain offset value that correspond to the reference signal , and uses a start position of one of the plurality of sub-bands in the bandwidth of the resource pool in which the reference signal resource is located as the start position of the frequency domain resource.

For example, bandwidths of the plurality of sub-bands are the same.

For example, when the bandwidth of the resource pool in which the reference signal resource is located is an integer multiple of the comb size, that the terminal device divides, based on the comb size, a bandwidth of a resource pool in which the reference signal resource is located into a plurality of sub-bands includes: The terminal device equally divides, based on the comb size, the bandwidth of the resource pool in which the reference signal resource is located into the plurality of sub-bands.

For example, the network device configures an SL-PRS resource 1 for a UE #A, and configures an SL-PRS resource 2 for a UE #B.

A comb size of the SL-PRS resource 1 and a comb size of the SL-PRS resource 2 are both 4, an offset value of the SL-PRS resource 1 is 0, and an offset value of the SL-PRS resource 2 is 1.

In this case, the UE #A divides the bandwidth of the resource pool (or a bandwidth occupied by an SL-PRS, a system bandwidth, an available bandwidth of the PSCCH, or the like) into four sub-bands, that is, four candidate resources of the PSCCH. Because the offset value of the SL-PRS resource 1 is 0, that is, there is no offset, the 1st candidate resource of the PSCCH in the four candidate resources of the PSCCH is a PSCCH resource of the UE #A, and is for sending SPCI.

Because the frequency domain offset value of the SL-PRS resource 2 is 1, the UE #B sends SPCI on the 2nd candidate PSCCH resource in the four PSCCH candidate resources.

The candidate resource of the PSCCH is determined in the foregoing manner, so that a conflict between control information carried on PSCCHs of different terminal devices can be avoided.

Specifically, a formula for calculating the frequency domain position of the PSCCH may be expressed as follows:

$$RB_{lowest} = k_{prs,} \left\lceil \frac{N_{RB}^{Total}}{C_{prs}} \right\rceil + f_k; \text{ or } SubCH_{lowest} = k_{prs,} \left\lceil \frac{N_{sub}^{Total}}{C_{prs}} \right\rceil + f_k,$$

where

$k_{prs,}$ represents the frequency domain offset value, $RB_{lowest}$ represents a start resource block position of the frequency domain resource, $N_{RB}^{Total}$ represents the bandwidth of the resource pool, $SubCH_{lowest}$ represents a start sub-channel position of the frequency domain resource, $N_{sub}^{Total}$ represents a quantity of sub-channels included in the resource pool, $C_{prs}$ represents the comb size, $\lceil \cdot \rceil$ represents rounding, and $f_k$ is an offset value. $f_k$ may be a fixed offset. For example, a value of $f_k$ may be 0, 1, 2, ..., or another natural number. This is not limited in this example.

When a base station does not pre-configure SL-PRS resources for a terminal, the terminal cannot determine a quantity of SL-PRS resources in one slot, and therefore cannot determine a position of a corresponding PSCCH resource. In this case, a method is provided to determine the position of the PSCCH resource based on a comb size and a frequency domain offset value of an SL-PRS. Because different users usually occupy different comb teeth, that is, there are different frequency domain offset values, different candidate positions of the PSCCH are provided, to avoid a conflict.

Different from a conventional method for determining a resource of a PSCCH, the embodiment shown in FIG. 14 provides the method for determining the resource of the PSCCH based on configuration information of the SL-PRS, a quantity of comb teeth, and the offset value. To avoid a conflict between SL-PRSs, SL-PRS configuration of different users needs to be different (different comb teeth, different frequency domain offset values, and the like are required). Therefore, PSCCHs determined based on the SL-PRS configuration are also different. This can reduce a probability of a conflict caused by sending control information on the control channel by different terminal devices.

It should be understood that sequence numbers of the foregoing processes do not mean execution sequences. The execution sequence of the processes should be determined based on functions and internal logic of the processes, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. For example, a fixed resource candidate position of a PSCCH may be designed, and a specific resource position of the PSCCH is determined based on a UE ID.

It should be further understood that in some of the foregoing embodiments, a device (for example, the network device or the terminal device) in an existing network architecture is mainly used as an example for description. It should be understood that a specific form of the device is not limited in embodiments of this application. For example, all devices that can implement a same function in the future are applicable to embodiments of this application.

It may be understood that in the foregoing method embodiments, the methods and operations implemented by the network device may alternatively be implemented by a component that may be used in the network device, and the methods and operations implemented by the terminal device may alternatively be implemented by a component that may be used in the terminal device.

The control information transmission method provided in embodiments of this application is described above in detail with reference to FIG. 3 to FIG. 14. The foregoing control information transmission method is mainly described from a perspective of a terminal device. It may be understood that, to implement the foregoing functions, the terminal device includes corresponding hardware structures and/or software modules for performing the functions.

A person skilled in the art should be able to be aware that, in this application, units and algorithm steps of the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

Communication apparatuses provided in embodiments of this application are described below in detail with reference to FIG. 15 and FIG. 17. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmit-end device or a receive-end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 15 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform sending/receiving-related operations, and the processing module 12 is configured to perform operations other than receiving and sending. The transceiver module 11 may also be referred to as a communication interface or a communication unit.

It should be understood that the foregoing transceiver module 11 may include a sending module and a receiving module. The sending module is configured to perform a sending action of the communication apparatus, and the receiving module is configured to perform a receiving action of the communication apparatus. For ease of description, in this embodiment of this application, the sending module and the receiving module are combined into one transceiver unit. This is uniformly described herein, and details are not described below again.

Optionally, the apparatus 10 may further include a storage module 13. The storage module 13 may be configured to store instructions and/or data. The processing module 12 may read the instructions and/or the data in the storage module, to enable the apparatus to implement actions of the devices in the foregoing method embodiments.

In a first design, the apparatus 10 may correspond to the first terminal device in the foregoing method embodiments, or may be a component (for example, a chip) of the first terminal device.

The apparatus 10 may implement steps or procedures performed by the first terminal device in the foregoing method embodiments. The transceiver module 11 may be configured to perform sending/receiving-related operations of the first terminal device in the foregoing method embodiments. The processing module 12 may be configured to perform processing-related operations of the first terminal device in the foregoing method embodiments.

In a possible implementation, the processing module 12 is configured to determine, based on a quantity of configured reference signal resources, a start position of a frequency domain resource occupied by a control channel, where the control channel is for carrying control information, and the configured reference signal resources include a plurality of reference signal resources. The transceiver module 11 is configured to send the control information on the control channel based on the start position of the frequency domain resource.

When the apparatus 10 is configured to perform the method in FIG. 8, the transceiver module 11 may be configured to perform steps of sending information in the method, for example, step S820, and the processing module 12 may be configured to perform a processing step in the method, for example, step S810.

When the apparatus 10 is configured to perform the method in FIG. 14, the transceiver module 11 may be configured to perform steps of sending/receiving information in the method, for example, step S1410, and the processing module 12 may be configured to perform a processing step in the method, for example, step S1420.

It should be understood that a specific process in which the units perform the foregoing corresponding steps is described in detail in the foregoing method embodiments. For brevity, details are not described herein again.

In a second design, the apparatus 10 may correspond to the second terminal device in the foregoing method embodiments, or may be a component (for example, a chip) of the second terminal device.

The apparatus 10 may implement steps or procedures performed by the second terminal device in the foregoing method embodiments. The transceiver module 11 may be configured to perform sending/receiving-related operations of the second terminal device in the foregoing method embodiments. The processing module 12 may be configured to perform processing-related operations of the second terminal device in the foregoing method embodiments.

In a possible implementation, the processing module 12 is configured to determine, based on a quantity of configured reference signal resources, a start position of a frequency domain resource occupied by a control channel, where the control channel is for carrying control information, and the configured reference signal resources include a plurality of reference signal resources. The transceiver module 11 is configured to send the control information on the control channel based on the start position of the frequency domain resource.

When the apparatus 10 is configured to perform the method in FIG. 8, the transceiver module 11 may be configured to perform steps of sending/receiving information in the method, for example, step S820, and the processing module 12 may be configured to perform a processing step in the method, for example, step S830 and S840.

It should be understood that a specific process in which the units perform the foregoing corresponding steps is described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing the corresponding step performed by the device (for example, the mobility management network element, a session management network element, a relay terminal device, or a remote terminal device) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit, for example, the processing module may be replaced with a processor, to respectively perform sending/receiving operations and processing-related operations in the method embodiments.

In addition, the transceiver module 11 may alternatively be a transceiver circuit (for example, which may include a receiving circuit and a sending circuit), and the processing module may be a processing circuit.

FIG. 16 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 16, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 16, the apparatus 20 further includes a transceiver 23, and the transceiver 23 is configured to receive and/or send a signal. For example, the processor 21 is configured to control the transceiver 23 to receive and/or send a signal.

It should be understood that the foregoing transceiver 23 may include a sending module and a receiving module. The sending module is configured to perform a sending action of the communication apparatus, and the receiving module is configured to perform a receiving action of the communication apparatus. For ease of description, in this embodiment of this application, the sending module and the receiving module are combined into one transceiver 23. This is uniformly described herein, and details are not described below again.

In a solution, the apparatus 20 is configured to implement operations performed by the first terminal device in the foregoing method embodiments.

In another solution, the apparatus 20 is configured to implement operations performed by the second terminal device in the foregoing method embodiments.

It should be understood that the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include but is not limited to these memories and any other suitable type of memories.

FIG. 17 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and call instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first terminal device in the foregoing method embodiments.

For example, the logic circuit 31 is configured to implement processing-related operations performed by the first terminal device in the foregoing method embodiments, and the input/output interface 32 is configured to implement sending and/or receiving-related operations performed by the first terminal device in the foregoing method embodiments.

In another solution, the chip system 30 is configured to implement operations performed by the second terminal device in the foregoing method embodiments.

For example, the logic circuit 31 is configured to implement processing-related operations performed by the second terminal device in the foregoing method embodiments, and the input/output interface 32 is configured to implement sending and/or receiving-related operations performed by the second terminal device in the foregoing method embodiments.

An embodiment of this application further provides a computer-readable storage medium. The computer-readable storage medium stores computer instructions for implementing the method performed by the device in the foregoing method embodiments.

For example, when a computer program is executed by a computer, the computer is enabled to implement the method performed by the first terminal device in the foregoing method embodiments.

For another example, when a computer program is executed by a computer, the computer is enabled to implement the method performed by the second terminal device in the foregoing method embodiments.

An embodiment of this application further provides a computer program product. The computer program product includes instructions. When the instructions are executed by a computer, the method performed by the device (for example, the first terminal device, or for another example, the second terminal device) in the foregoing method embodiments is implemented.

An embodiment of this application further provides a communication system. The communication system includes the foregoing first terminal device and the foregoing second terminal device.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control information transmission method, comprising:

   determining, based on a quantity of configured reference signal resources, a start position of a frequency domain resource occupied by a control channel, wherein the control channel is for carrying control information, and the configured reference signal resources comprise a plurality of reference signal resources; and
   sending the control information on the control channel based on the start position of the frequency domain resource.

2. A control information transmission method, comprising:

   determining, based on a quantity of configured reference signal resources, a start position of a frequency domain resource occupied by a control channel, wherein the control channel is for carrying control information, and the configured reference signal resources comprise a plurality of reference signal resources; and
   receiving the control information on the control channel based on the start position of the frequency domain resource.

3. The method according to claim 1 or 2, wherein a start position of one of a plurality of sub-bands of a bandwidth of a resource pool in which the configured reference signal resources are located is used as the start position of the frequency domain resource, and a quantity of the plurality of sub-bands is related to the quantity of configured reference signal resources.

4. The method according to claim 3, wherein bandwidths of the plurality of sub-bands are the same or different, and the plurality of sub-bands occupy a part or all of the bandwidth of the resource pool.

5. The method according to claim 3 or 4, wherein the quantity of configured reference signal resources, the start position of the frequency domain resource, and an index of the frequency domain resource satisfy the following relationship:

$$RB_{lowest} = \left(k_{pscch} - 1\right)\left\lceil \frac{N_{RB}^{Total}}{K_{prs}} \right\rceil + f_k;$$

or

$$SubCH_{lowest} = \left(k_{pscch} - 1\right)\left\lceil \frac{N_{sub}^{Total}}{K_{prs}} \right\rceil + f_k,$$

wherein

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels comprised in the resource pool, $K_{prs}$ represents a quantity of configured resources, $k_{pscch}$ represents the index of the frequency domain resource, $\lceil \cdot \rceil$ represents rounding, $k_{pscch}$ is greater than or equal to 1 and less than or equal to $K_{prs}$, and $f_k$ is an offset value.

6. The method according to claim 3 or 4, wherein the quantity of configured reference signal resources, the start position of the frequency domain resource, and an index of the frequency domain resource satisfy the following relationship:

$$RB_{lowest} = k_{pscch}\left\lceil \frac{N_{RB}^{Total}}{K_{prs}} \right\rceil + f_k;$$

or

$$SubCH_{lowest} = k_{pscch}\left\lceil \frac{N_{sub}^{Total}}{K_{prs}} \right\rceil + f_k,$$

wherein

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels comprised in the resource pool, $K_{prs}$ represents the quantity of configured reference signal resources, $k_{pscch}$ represents the index of the frequency domain resource, $\lceil \cdot \rceil$ represents rounding, $k_{pscch}$ is greater than or equal to 1 and less than or equal to $K_{prs}$, and $f_k$ is an offset value.

7. The method according to claim 3 or 4, wherein the quantity of configured reference signal resources, the start position of the frequency domain resource, and an index of the frequency domain resource satisfy the following relationship:

$$RB_{lowest} = \left(k_{prs} + k_0\right)\left\lceil \frac{N_{RB}^{Total}}{K_{prs}} \right\rceil + f_k;$$

or

$$SubCH_{lowest} = \left(k_{prs} + k_0\right)\left\lceil \frac{N_{sub}^{Total}}{K_{prs}} \right\rceil + f_k,$$

wherein

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels comprised in the resource pool, $K_{prs}$ represents the quantity of configured reference signal resources, $k_{prs}$ represents an index of the reference signal resource, $\lceil \cdot \rceil$ represents rounding, $f_k$ is an offset value, and $k_0$ is a constant.

8. The method according to claim 1 or any one of claims 3 to 7, wherein
   the determining, based on a quantity of configured reference signal resources, a start position of a frequency domain resource occupied by a control channel comprises:

   determining, based on the quantity of configured reference signal resources and a first index, the start position of the frequency domain resource occupied by the control channel, wherein
   the first index is an index of a first reference signal resource, and the first reference signal resource is for sending a reference signal.

9. The method according to claim 8, wherein the sending the control information on the control channel based on the start position of the frequency domain resource comprises:
   sending the control information on the control channel based on a start position of a sub-band corresponding to the first index.

10. The method according to claim 2 or any one of claims 3 to 7, wherein
    the determining, based on a quantity of configured reference signal resources, a start position of a frequency domain resource occupied by a control channel comprises:
    determining, based on the quantity of configured reference signal resources and the first index, the start position of the frequency domain resource occupied by the control channel, wherein the first index is an index of a first reference signal resource, and the first reference signal resource is for receiving a reference signal.

11. The method according to claim 10, wherein the receiving the control information on the control channel based on the start position of the frequency domain resource comprises:
    receiving the control information on the control channel based on a start position of a sub-band corresponding to the first index.

12. The method according to any one of claims 8 to 11, wherein an index of each of the plurality of reference signal resources is determined based on identifiers of the plurality of reference signal resources, and an index of each of the plurality of sub-bands is determined based on a frequency domain position corresponding to each of the plurality of sub-bands.

13. The method according to any one of claims 8 to 12, wherein when a minimum value of the index is 0, the quantity of configured reference signal resources, the start position of the frequency domain resource, and the index of the frequency domain resource satisfy the following relationship:

$$RB_{lowest} = k_{prs} \left\lceil \frac{N_{RB}^{Total}}{K_{prs}} \right\rceil + f_k; \text{ or } SubCH_{lowest} = k_{prs} \left\lceil \frac{N_{sub}^{Total}}{K_{prs}} \right\rceil + f_k;$$

or
when a minimum value of the index is 1, the quantity of configured reference signal resources, the start position of the frequency domain resource, and the index of the frequency domain resource satisfy the following relationship:

$$RB_{lowest} = \left(k_{prs} - 1\right) \left\lceil \frac{N_{RB}^{Total}}{K_{prs}} \right\rceil + f_k; \text{ or } SubCH_{lowest} = \left(k_{prs} - 1\right) \left\lceil \frac{N_{sub}^{Total}}{K_{prs}} \right\rceil + f_k,$$

wherein
$k_{prs}$ represents the index of the frequency domain resource, $RB_{lowest}$ represents the start resource block of the frequency domain resource, $N_{RB}^{Total}$ represents the bandwidth of the resource pool, $SubCH_{lowest}$ represents a start sub-channel position of the frequency domain resource, $N_{sub}^{Total}$ represents the quantity of sub-channels comprised in the resource pool, $K_{prs}$ represents the quantity of configured resources, $\lceil \cdot \rceil$ represents rounding, and $f_k$ is the offset value.

14. The method according to any one of claims 1 to 13, wherein the plurality of reference signal resources are located in one slot; or
the plurality of reference signal resources are located in a plurality of slots, and at least one of the plurality of slots comprises a plurality of frequency domain resources respectively corresponding to a plurality of control channels.

15. The method according to any one of claims 1 to 14, wherein the plurality of reference signal resources are respectively for sending a plurality of reference signals, and resource multiplexing is performed on the plurality of reference signals in at least one of the following multiplexing manners:
frequency division multiplexing, time division multiplexing, or comb division multiplexing.

16. A control information transmission method, comprising:

receiving configuration information from a network device, wherein the configuration information is for configuring a reference signal resource;
determining, based on the configuration information, a start position of a frequency domain resource occupied by a control channel, wherein the control channel is for carrying control information; and
sending the control information on the control channel based on the start position of the frequency domain resource.

17. The method according to claim 16, wherein the configuration information comprises a comb size and a frequency domain offset value that correspond to the reference signal resource.

18. The method according to claim 17, wherein a start position of a first sub-band in a plurality of sub-bands of a bandwidth of a resource pool in which the reference signal resource is located is used as the start position of the frequency domain resource, a quantity of the plurality of sub-bands is related to the comb size, and a ranking of the first sub-band in the plurality of sub-bands is related to the frequency domain offset value.

19. The method according to claim 18, wherein bandwidths of the plurality of sub-bands are the same.

20. The method according to any one of claims 17 to 19, wherein the comb size, the frequency domain offset value, and the start position of the frequency domain resource satisfy the following relationship:

$$RB_{lowest} = k_{prs,} \left\lceil \frac{N_{RB}^{Total}}{C_{prs}} \right\rceil + f_k; \text{ or } SubCH_{lowest} = k_{prs,} \left\lceil \frac{N_{Sub}^{Total}}{C_{prs}} \right\rceil + f_k,$$

wherein
$k_{prs,}$ represents the frequency domain offset value, $RB_{lowest}$ represents a start resource block position of the frequency domain resource, $N_{RB}^{Total}$ represents the bandwidth of the resource pool, $SubCH_{lowest}$ represents a start sub-channel position of the frequency domain resource, $N_{sub}^{Total}$ represents a quantity of sub-channels comprised in the resource pool, $C_{prs}$ represents the comb size, $\lceil \cdot \rceil$ represents rounding, and $f_k$ is an offset value.

21. A communication apparatus, comprising a communication interface and a processor, wherein the communication interface is configured to receive and send data and/or signaling, and the processor is configured to execute a computer program or instructions, to enable the communication apparatus to perform the method according to any one of claims 1 to 20.

22. The apparatus according to claim 21, further comprising a memory, wherein the memory is configured to store the computer program or the instructions.

23. A communication system, comprising a first terminal device and a second terminal device, wherein

the first terminal device is configured to perform the method according to any one of claim 1, claims 3 to 9, or claims 12 to 15; and

the second terminal device is configured to perform the method according to any one of claim 2, claims 3 to 7, or claims 10 to 15.

24. A computer-readable storage medium, comprising a computer program or instructions, wherein when the computer program or the instructions are run on a computer, the method according to any one of claims 1 to 20 is performed.

25. A control information transmission apparatus, comprising:
a processing unit, configured to determine, based on a quantity of configured reference signal resources, a start position of a frequency domain resource occupied by a control channel, wherein the control channel is for carrying control information, and the configured reference signal resources comprise a plurality of reference signal resources; and a transceiver unit, configured to send the control information on the control channel based on the start position of the frequency domain resource.

26. A control information transmission apparatus, comprising:
a processing unit, configured to determine, based on a quantity of configured reference signal resources, a start position of a frequency domain resource occupied by a control channel, wherein the control channel is for carrying control information, and the configured reference signal resources comprise a plurality of reference signal resources; and a transceiver unit, configured to receive the control information on the control channel based on the start position of the frequency domain resource.

27. The apparatus according to claim 25 or 26, wherein a start position of one of a plurality of sub-bands of a bandwidth of a resource pool in which the reference signal resource is located is used as the start position of the frequency domain resource, and a quantity of the plurality of sub-bands is related to the quantity of configured reference signal resources.

28. The apparatus according to claim 27, wherein bandwidths of the plurality of sub-bands are the same or different, and the plurality of sub-bands occupy a part or all of the bandwidth of the resource pool.

29. The apparatus according to claim 27 or 28, wherein the quantity of configured reference signal resources, the start position of the frequency domain resource, and an index of the frequency domain resource satisfy the following relationship:

$$RB_{lowest} = \left(k_{pscch} - 1\right)\left\lceil \frac{N_{RB}^{Total}}{K_{prs}} \right\rceil + f_k;$$

or

$$SubCH_{lowest} = \left(k_{pscch} - 1\right)\left\lceil \frac{N_{Sub}^{Total}}{K_{prs}} \right\rceil + f_k,$$

wherein

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels comprised in the resource pool, $K_{prs}$ represents a quantity of configured resources, $k_{pscch}$ represents the index of the frequency domain resource, $\lceil \cdot \rceil$ represents rounding, $k_{pscch}$ is greater than or equal to 1 and less than or equal to $K_{prs}$, and $f_k$ is an offset value.

30. The apparatus according to claim 27 or 28, wherein the quantity of configured reference signal resources, the start position of the frequency domain resource, and an index of the frequency domain resource satisfy the following relationship:

$$RB_{lowest} = k_{pscch}\left\lceil \frac{N_{RB}^{Total}}{K_{prs}} \right\rceil + f_k;$$

or

$$SubCH_{lowest} = k_{pscch} \left\lceil \frac{N_{sub}^{Total}}{K_{prs}} \right\rceil + f_k,$$

wherein

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels comprised in the resource pool, $K_{prs}$ represents the quantity of configured reference signal resources, $k_{pscch}$ represents the index of the frequency domain resource, $\lceil \cdot \rceil$ represents rounding, $k_{pscch}$ is greater than or equal to 1 and less than or equal to $K_{prs}$, and $f_k$ is an offset value.

31. The apparatus according to claim 27 or 28, wherein the quantity of configured reference signal resources, the start position of the frequency domain resource, and an index of the frequency domain resource satisfy the following relationship:

$$RB_{lowest} = (k_{prs} + k_0) \left\lceil \frac{N_{RB}^{Total}}{K_{prs}} \right\rceil + f_k;$$

or

$$SubCH_{lowest} = (k_{prs} + k_0) \left\lceil \frac{N_{sub}^{Total}}{K_{prs}} \right\rceil + f_k,$$

wherein

$RB_{lowest}$ represents a start resource block of the frequency domain resource, $N_{RB}^{Total}$ represents the bandwidth of the resource pool, $SubCH_{lowest}$ represents a start sub-channel of the frequency domain resource, $N_{sub}^{Total}$ represents a quantity of sub-channels comprised in the resource pool, $K_{prs}$ represents the quantity of configured reference signal resources, $k_{prs}$ represents an index of the reference signal resource, $\lceil \cdot \rceil$ represents rounding, $f_k$ is an offset value, and $k_0$ is a constant.

32. The apparatus according to claim 25 or any one of claims 27 to 31, wherein that the processing unit determines, based on a quantity of configured reference signal resources, a start position of a frequency domain resource occupied by a control channel comprises:
the processing unit determines, based on the quantity of configured reference signal resources and a first index, the start position of the frequency domain resource occupied by the control channel, wherein the first index is an index of a reference signal resource used by the transceiver unit to receive a reference signal, and the first reference signal resource is for sending a reference signal.

33. The apparatus according to claim 32, wherein that the transceiver unit sends the control information on the control channel based on the start position of the frequency domain resource comprises:
the transceiver unit sends the control information on the control channel based on a start position of a sub-band corresponding to the first index.

34. The apparatus according to claim 26 or any one of claims 28 to 31, wherein that the processing unit determines, based on a quantity of configured reference signal resources, a start position of a frequency domain resource occupied by a control channel comprises:
the processing unit determines, based on the quantity of configured reference signal resources and a first index, the start position of the frequency domain resource occupied by the control channel, wherein the first index is an index of a first reference signal resource, and the first reference signal resource is for receiving a reference signal.

35. The apparatus according to claim 34, wherein that the transceiver unit sends the control information on the control channel based on the start position of the frequency domain resource comprises:

the transceiver unit receives the control information on the control channel based on a start position of a sub-band corresponding to the first index.

36. The apparatus according to any one of claims 32 to 35, wherein an index of each of the plurality of reference signal resources is determined based on identifiers of the plurality of reference signal resources, and an index of each of the plurality of sub-bands is determined based on a frequency domain position corresponding to each of the plurality of sub-bands.

37. The apparatus according to any one of claims 32 to 36, wherein when a minimum value of the index is 0, the quantity of configured reference signal resources, the start position of the frequency domain resource, and the index of the frequency domain resource satisfy the following relationship:

$$RB_{lowest} = k_{prs} \left\lceil \frac{N_{RB}^{Total}}{K_{prs}} \right\rceil + f_k; \text{ or } SubCH_{lowest} = k_{prs} \left\lceil \frac{N_{sub}^{Total}}{K_{prs}} \right\rceil + f_k;$$

or
when a minimum value of the index is 1, the quantity of configured reference signal resources, the start position of the frequency domain resource, and the index of the frequency domain resource satisfy the following relationship:

$$RB_{lowest} = (k_{prs} - 1) \left\lceil \frac{N_{RB}^{Total}}{K_{prs}} \right\rceil + f_k; \text{ or } SubCH_{lowest} = (k_{prs} - 1) \left\lceil \frac{N_{sub}^{Total}}{K_{prs}} \right\rceil + f_k,$$

wherein
$k_{prs}$ represents the index of the frequency domain resource, $RB_{lowest}$ represents the start resource block of the frequency domain resource, $N_{RB}^{Total}$ represents the bandwidth of the resource pool, $SubCH_{lowest}$ represents a start sub-channel position of the frequency domain resource, $N_{sub}^{Total}$ represents the quantity of sub-channels comprised in the resource pool, $K_{prs}$ represents the quantity of configured resources, $\lceil \cdot \rceil$ represents rounding, $f_k$ and is the offset value.

38. The apparatus according to any one of claims 25 to 37, wherein the plurality of reference signal resources are located in one slot; or
the plurality of reference signal resources are located in a plurality of slots, and at least one of the plurality of slots comprises a plurality of frequency domain resources respectively corresponding to a plurality of control channels.

39. The apparatus according to any one of claims 25 to 38, wherein the plurality of reference signal resources are respectively for sending a plurality of reference signals, and resource multiplexing is performed on the plurality of reference signals in at least one of the following multiplexing manners: frequency division multiplexing, time division multiplexing, or comb division multiplexing.

40. A control information transmission apparatus, comprising:

a transceiver unit, configured to receive configuration information from a network device, wherein the configuration information is for configuring a reference signal resource; and a processing unit, configured to determine, based on the configuration information, a start position of a frequency domain resource occupied by a control channel, wherein the control channel is for carrying control information, wherein
the transceiver unit is further configured to send the control information on the control channel based on the start position of the frequency domain resource.

41. The apparatus according to claim 40, wherein the configuration information comprises a comb size and a frequency domain offset value that correspond to the reference signal resource.

42. The apparatus according to claim 41, wherein a start position of a first sub-band in a plurality of sub-bands of a bandwidth of a resource pool in which the configured reference signal resources are located is used as the start position of the frequency domain resource, a quantity of the plurality of sub-bands is related to the comb size, and a ranking of the first sub-band in the plurality of sub-bands is related to the frequency domain offset value.

**43.** The apparatus according to claim 42, wherein bandwidths of the plurality of sub-bands are the same.

**44.** The apparatus according to any one of claims 41 to 43, wherein the comb size, the offset value, and the start position of the frequency domain resource satisfy the following relationship:

$$RB_{lowest} = k_{prs} \left\lceil \frac{N_{RB}^{Total}}{C_{prs}} \right\rceil + f_k; \text{ or } SubCH_{lowest} = k_{prs} \left\lceil \frac{N_{Sub}^{Total}}{C_{prs}} \right\rceil + f_k,$$

wherein

$k_{prs}$, represents the offset value, $RB_{lowest}$ represents a start resource block position of the frequency domain resource, $N_{RB}^{Total}$ represents the bandwidth of the resource pool, $SubCH_{lowest}$ represents a start sub-channel position of the frequency domain resource, $N_{sub}^{Total}$ represents a quantity of sub-channels comprised in the resource pool, $C_{prs}$ represents the comb size, $\lceil \cdot \rceil$ represents rounding, and $f_k$ is an offset value.

FIG. 1

FIG. 2

FIG. 3

FIG. 4

UE #1

UE #2

AGC

PSCCH

PSSCH

FIG. 5

FIG. 6

SL-PRS

UE #1

SL-PRS

UE #2

(a)

RSU #1

SL-PRS

SL-PRS

SL-PRS

RSU #2

RSU #3

(b)

LMF

Measurement result

SL-PRS

SL-PRS

(c)

FIG. 7

First terminal device

Second terminal device

S810: Determine, based on a quantity of configured reference signal resources, a start position of a frequency domain resource occupied by a control channel

S820: Send control information to the second terminal device on the control channel based on the start position of the frequency domain resource

S830: Determine, based on the quantity of configured reference signal resources, the start position of the frequency domain resource occupied by the control channel

S840: Demodulate the control information

FIG. 8

| AGC | PSCCH #4 | AGC | SL-PRS #1 | GAP |
| AGC | PSCCH #3 | | SL-PRS #2 | |
| AGC | PSCCH #2 | | SL-PRS #3 | |
| AGC | PSCCH #1 | | SL-PRS #4 | |

FIG. 9

FIG. 10

FIG. 11

Slot #1                                    Slot #2

FIG. 12

SL-PRS #1          SL-PRS #3

SL-PRS #2          SL-PRS #4

FIG. 13

First terminal device

Network device

← S1410: Configuration information —

S1420: Determine, based on the configuration information, a start position of a frequency domain resource occupied by a control channel

FIG. 14

10

Transceiver module 11

Processing module 12

Storage module 13

FIG. 15

20

Processor 21 — Transceiver 23

Memory 22

FIG. 16

Chip system 30

Logic circuit 31

Input/Output interface 32

FIG. 17

## INTERNATIONAL SEARCH REPORT

| | International application No. |
|---|---|
| | **PCT/CN2023/112193** |

### A. CLASSIFICATION OF SUBJECT MATTER

H04W 72/02(2009.01)i; H04W 72/40(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, CJFD, 3GPP: 直通, 侧链路, 侧行, 子带, 子载波, 频域, 参考信号, 参考符号, 控制信道, 起始, 位置, 个数, 数目, 数量, SL-PRS, PRS, PSCCH, SCI, sidelink, SL, D2D, RS, reference, signal, number, quantity, amount, position, frequency, subcarrier, subband, carrier

### C. DOCUMENTS CONSIDERED TO BE RELEVANT

| Category* | Citation of document, with indication, where appropriate, of the relevant passages | Relevant to claim No. |
|---|---|---|
| X | CN 114257355 A (SPREADTRUM COMMUNICATIONS (SHANGHAI) CO., LTD.) 29 March 2022 (2022-03-29) <br> description, paragraphs [0040]-[0071], and figure 2 | 1-2, 8-12, 14-17, 21-26, 32-36, 38-41 |
| A | CN 107889148 A (ZTE CORP.) 06 April 2018 (2018-04-06) <br> entire document | 1-44 |
| A | CN 111436131 A (HUAWEI TECHNOLOGIES CO., LTD.) 21 July 2020 (2020-07-21) <br> entire document | 1-44 |
| A | WO 2020143059 A1 (GUANGDONG OPPO MOBILE COMMUNICATIONS CO., LTD.) 16 July 2020 (2020-07-16) <br> entire document | 1-44 |
| A | WO 2022069708 A1 (FRAUNHOFER-GESELLSCHAFT ZUR FÖRDERUNG DER ANGEWANDTEN FORSCHUNG E.V.) 07 April 2022 (2022-04-07) <br> entire document | 1-44 |

☑ Further documents are listed in the continuation of Box C.     ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **11 September 2023** | **20 September 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/112193** |

**C.    DOCUMENTS CONSIDERED TO BE RELEVANT**

| Category* | Citation of document, with indication, where appropriate, of the relevant passages | Relevant to claim No. |
|---|---|---|
| A | HUAWEI et al. "Discussion on solutions to support SL positioning" *3GPP TSG-RAN WG1 Meeting #109-e, R1-2203164*, 20 May 2022 (2022-05-20), entire document | 1-44 |

Form PCT/ISA/210 (second sheet) (July 2022)

**INTERNATIONAL SEARCH REPORT**
Information on patent family members

International application No.

**PCT/CN2023/112193**

| Patent document cited in search report | | | Publication date (day/month/year) | Patent family member(s) | | | Publication date (day/month/year) |
|---|---|---|---|---|---|---|---|
| CN | 114257355 | A | 29 March 2022 | WO | WO2022062891 | A1 | 31 March 2022 |
| CN | 107889148 | A | 06 April 2018 | US | 2022158706 | A1 | 19 May 2022 |
| | | | | WO | 2018058745 | A1 | 05 April 2018 |
| | | | | US | 2020137598 | A1 | 30 April 2020 |
| CN | 111436131 | A | 21 July 2020 | EP | 3905817 | A1 | 03 November 2021 |
| | | | | KR | 20210111845 | A | 13 September 2021 |
| | | | | US | 2021337514 | A1 | 28 October 2021 |
| | | | | WO | 2020143750 | A1 | 16 July 2020 |
| WO | 2020143059 | A1 | 16 July 2020 | BR | 112021013405 | A2 | 14 September 2021 |
| | | | | KR | 20210119402 | A | 05 October 2021 |
| | | | | JP | 2022515415 | A | 18 February 2022 |
| | | | | US | 2021329603 | A1 | 21 October 2021 |
| | | | | MX | 2021008181 | A | 11 August 2021 |
| | | | | EP | 3890415 | A1 | 06 October 2021 |
| | | | | CN | 112789915 | A | 11 May 2021 |
| | | | | CN | 113286371 | A | 20 August 2021 |
| WO | 2022069708 | A1 | 07 April 2022 | EP | 4223044 | A1 | 09 August 2023 |
| | | | | KR | 20230082651 | A | 08 June 2023 |

Form PCT/ISA/210 (patent family annex) (July 2022)

**REFERENCES CITED IN THE DESCRIPTION**

**Patent documents cited in the description**

- CN 202210961974